# EUROPEAN PATENT APPLICATION

(11) **EP 4 071 741 A1**
(43) Date of publication of application: **12.10.2022**
(21) Application number: 22165416.3
(22) Date of filing: 30.03.2022
(51) Int. Cl.: G08G 1/16, B60W 50/14

(54) **DISPLAY CONTROL SYSTEM, DISPLAY CONTROL METHOD, AND NON-TRANSITORY STORAGE MEDIUM**

(30) Priority: 08.04.2021 JP 2021065591
(71) Applicant: TOYOTA JIDOSHA KABUSHIKI KAISHA, Toyota-shi, Aichi-ken, 471-8571 (JP)
(72) Inventor: HIROHATA, Mikikane, Toyota-shi, 471-8571 (JP)
(74) Representative: D Young & Co LLP

(57) **Abstract**

A display control system (1) includes an infrastructure sensor information acquisition unit (114), a blind spot information generation unit (170), and a display control unit (180). The infrastructure sensor information acquisition unit (114) acquires infrastructure sensor information, which is obtained when an infrastructure sensor (10) provided around a road detects information around the vehicle (20) on the road. The blind spot information generation unit (170) generates, based on the infrastructure sensor information, blind spot information on a blind spot area that becomes a blind spot due to an obstacle (60) when viewed from the vehicle (20). The display control unit (180) control a display device such that the blind spot information is displayed on the vehicle (20).

## Description

### BACKGROUND OF THE INVENTION

### 1. Field of the Invention

The present invention relates to a display control system, a display control method, and a non-transitory storage medium, and, in particular, to a display control system, a display control method, and a non-transitory storage medium that execute control for displaying information on a vehicle.

### 2. Description of Related Art

Japanese Unexamined Patent Application Publication No. 2002-087188 (JP 2002-087188 A) discloses a traffic safety assistance apparatus that efficiently prevents a traffic accident that occurs due to an existence of a blind spot by a subject vehicle. JP 2002-087188 A discloses a technology in which the vehicle includes display units on a front surface, a rear surface, a right side surface, and a left side surface thereof, respectively, a camera provided in the subject vehicle captures an image of a field of view, which becomes a blind spot from a viewpoint for observing each display unit, and the display units display the obtained image to the periphery of the subject vehicle. Then, in the technology disclosed in JP 2002-087188 A, a monitoring processing unit detects a vehicle, a motorcycle, a pedestrian, and the like from the obtained image, and the display units display the obtained information to the periphery of the subject vehicle.

### SUMMARY OF THE INVENTION

In the technology disclosed in JP 2002-087188 A, when an obstacle exists around the vehicle, the image obtained by the camera provided in the vehicle may not be capable of displaying a blind spot area, which becomes a blind spot, due to the obstacle. Therefore, when an obstacle exists around the vehicle, even when the image obtained by the camera provided in the vehicle is displayed on the display units of the vehicle, a situation of the blind spot area may not be grasped.

The present invention provides a display control system, a display control method, and a non-transitory storage medium capable of displaying blind spot information on a blind spot area, which becomes a blind spot due to an obstacle even when an obstacle exists around the vehicle.

A display control system according to a first aspect of the present invention includes an infrastructure sensor information acquisition unit configured to acquire infrastructure sensor information obtained by detecting information around a vehicle existing on a road by an infrastructure sensor, which is provided around the road, a blind spot information generation unit configured to generate blind spot information on a blind spot area, which becomes a blind spot due to an obstacle when viewed from the vehicle, based on the infrastructure sensor information, and a display control unit configured to execute control a display device such that the blind spot information is displayed on the vehicle.

In the first aspect, the display control system may further include an obstacle determination unit configured to determine whether an obstacle exists around the vehicle when viewed from a vehicle sensor mounted on the vehicle. The display control unit may be configured to, when the obstacle determination unit determines that an obstacle exists around the vehicle, control the display device such that the blind spot information is displayed on the vehicle. As such, by displaying the blind spot information on the vehicle when an obstacle exists around the vehicle, the blind spot information can be displayed only when necessary. Therefore, it is possible to reduce a processing load.

In the first aspect, the display control unit may be configured to, when the obstacle determination unit determines that the obstacle does not exist around the vehicle, control the display device such that vehicle sensor information, which is information detected by the vehicle sensor, is displayed on the vehicle. When no obstacle exists, the vehicle sensor can efficiently detect (photograph) an area, which becomes a blind spot due to the vehicle itself. In this case, the vehicle sensor information obtained by the vehicle sensor can be efficiently used. Therefore, when the vehicle sensor information can be efficiently used, by displaying the vehicle sensor information on the vehicle, it is possible to promote cooperation between the vehicle sensor and the infrastructure sensor.

In the first aspect, the display control system may further include a moving body detection unit configured to detect a moving body traveling around the vehicle and a display position decision unit configured to, based on the position of the detected moving body, decide a display position on which information is displayed on a surface of the vehicle. The display control unit may be configured to control the display device such that the information is displayed on the decided display position. With such a configuration, it is possible to display the information at a position at which the information is easily viewed from a moving body traveling around the vehicle.

In the first aspect, the display control unit may be configured to, when a determination is made that a moving object exists in the blind spot area, control the display device such that the blind spot information is displayed on the vehicle. With such a configuration, the blind spot information on the moving object existing in the blind spot area can be displayed on the surface of the vehicle. Therefore, it is possible to notify surroundings of the vehicle of a fact that a moving object exists in the blind spot area.

In the first aspect, the display control unit may be configured to, when a determination is made that a possibility of a collision between a moving body traveling around the vehicle and a moving object existing in the blind spot area, control the display device such that the blind spot information is displayed on the surface of the vehicle. With such a configuration, it is possible to more appropriately warn a driver and the like of the moving body that there is a possibility that the moving body may collide with the moving object.

In the first aspect, the blind spot information may include an image of the moving object existing in the blind spot area. The blind spot information generation unit may be configured to, when the blind spot information is displayed on the surface of the vehicle, generate the blind spot information to which image processing is applied such that a movement direction of the image of the moving object corresponds to a movement direction of the actual moving object when the actual moving object is assumed to be viewed from a viewpoint of the moving body traveling around the vehicle. The display control unit may be configured to control the display device such that the blind spot information, to which the image processing is applied, is displayed on the surface of the vehicle. With such a configuration, in comparison with a case where an image of the moving object indicated in the infrastructure sensor information is displayed as it is, it is possible to set the movement direction of the image of the moving object when the blind spot information is displayed on the surface of the vehicle to a more appropriate direction.

Further, a display control method according to a second aspect of the present invention includes acquiring infrastructure sensor information obtained by detecting information around a vehicle existing on a road by an infrastructure sensor, which is provided around the road, generating blind spot information on a blind spot area, which is a blind spot due to an obstacle when viewed from the vehicle, based on the infrastructure sensor information, and controlling the display device such that the blind spot information is displayed on the vehicle.

A third aspect of the present invention is a non-transitory storage medium storing instructions that are executable using one or more processors and that cause the one or more processors to perform functions. The functions include acquiring infrastructure sensor information obtained by detecting information around a vehicle existing on a road by an infrastructure sensor, which is provided around the road, generating blind spot information on a blind spot area, which is a blind spot due to an obstacle when viewed from the vehicle, based on the infrastructure sensor information, and controlling the blind spot information is displayed on the vehicle.

With each aspect of the present invention, since blind spot information is generated using infrastructure sensor information, it is possible to appropriately generate the blind spot information on an area, which becomes a blind spot due to an obstacle, even when the obstacle exists around a vehicle. Therefore, the present invention can display, on the vehicle, the blind spot information on the blind spot area, which becomes a blind spot due to the obstacle, even when the obstacle exists around the vehicle.

With each aspect of the present invention, it is possible to provide a display control system, a display control method, and a non-transitory storage medium capable of displaying blind spot information on a blind spot area, which becomes a blind spot due to an obstacle, even when the obstacle exists around a vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a display control system according to a first embodiment;
FIG. 2 is a diagram illustrating a hardware configuration of the display control system according to the first embodiment;
FIG. 3 is a functional block diagram illustrating a configuration of the display control system according to the first embodiment;
FIG. 4 is a flowchart illustrating a display control method executed by the display control system according to the first embodiment;
FIG. 5 is a diagram used for describing processing executed by the display control system according to the first embodiment;
FIG. 6 is a functional block diagram illustrating a configuration of the display control system according to a second embodiment;
FIG. 7 is a flowchart illustrating a display control method executed by the display control system according to the second embodiment;
FIG. 8 is a diagram used for describing processing executed by the display control system according to the second embodiment;
FIG. 9 is a functional block diagram illustrating a configuration of the display control system according to a third embodiment;
FIG. 10 is a flowchart illustrating a display control method executed by the display control system according to the third embodiment;
FIG. 11 is a diagram used for describing an image processing method using infrastructure sensor information according to the third embodiment;
FIG. 12 is another diagram used for describing the image processing method using the infrastructure sensor information according to the third embodiment;
FIG. 13 is a diagram used for describing an image processing method using computer graphics according to the third embodiment;
FIG. 14 is a diagram illustrating the display control system according to a fourth embodiment;
FIG. 15 is a flowchart illustrating a display control method executed by the display control system according to the fourth embodiment; and
FIG. 16 is a diagram used for describing processing executed by the display control system according to the fourth embodiment.

### DETAILED DESCRIPTION OF EMBODIMENTS

### First Embodiment

Hereinafter, embodiments of the present invention will be described with reference to drawings. In order to clarify the description, the following description and drawings are appropriately omitted or simplified. Further, in each drawing, substantially the same components are denoted by the same reference signs, and duplicate descriptions are omitted as necessary.

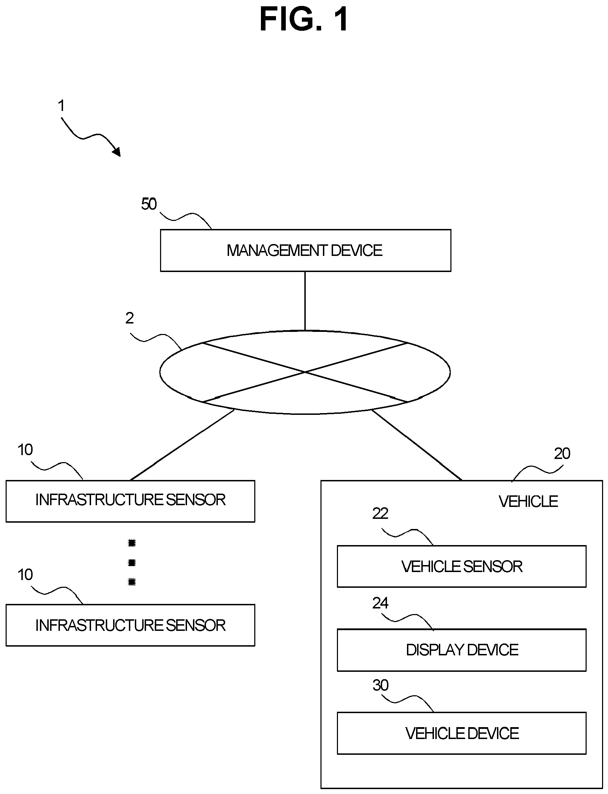

FIG. 1 is a diagram illustrating a configuration of a display control system 1 according to a first embodiment. The display control system 1 according to the first embodiment includes a management device 50, a plurality of infrastructure sensors 10, and a vehicle 20. The vehicle 20 is provided with a vehicle sensor 22, a display device 24, and a vehicle device 30. The management device 50, the plurality of infrastructure sensors 10, and each device provided in the vehicle 20 are communicably connected to each other via a wired or wireless network 2. Further, the plurality of infrastructure sensors 10 may be communicably connected to each other via the network 2. The number of networks 2 is not limited to one. For example, the network 2 that connects the management device 50 to the infrastructure sensor 10 may differ from the network 2 that connects the management device 50 to each device provided in the vehicle 20.

The infrastructure sensors 10 are arranged at different positions from each other. For example, the infrastructure sensor 10 is installed around a road. Further, for example, the infrastructure sensors 10 may be installed in a vicinity of the road at intervals of 50 m to 100 m. The infrastructure sensor 10 is an object detection device including, for example, a camera or a sensor. For example, the infrastructure sensor 10 captures an image of (photographs) a predetermined area (an image capturing area) corresponding to a position on which the infrastructure sensor 10 is installed. The image capturing area corresponds to an angle of view (a field of view; an image capturing range) of the infrastructure sensor 10. The infrastructure sensor 10 may be a visible light camera, a three-dimensional camera (a point cloud camera), such as a Light Detection and Ranging (LiDAR), or an infrared camera.

The infrastructure sensor 10 detects an object, and, in particular, a moving object (a moving body), which is a movable object. The moving object (the moving body) detected by the infrastructure sensor 10 may be, for example, a person, such as a pedestrian, a light vehicle, such as a bicycle, or a vehicle, such as an automobile or a motorcycle. Further, the infrastructure sensor 10 may detect a fixed object (such as a structure, a mailbox, a utility pole, a sign, or a building) around the infrastructure sensor 10.

The infrastructure sensor 10 generates infrastructure sensor information, which is information indicating a detected object. The infrastructure sensor 10 transmits the generated infrastructure sensor information to the management device 50. When the infrastructure sensor 10 is a camera, the infrastructure sensor information may be, for example, image information indicating an image of the detected object. Hereinafter, the term "image" also means "image data indicating an image" as a processing target in information processing. Further, the "image" includes a still image and a moving image.

Further, the infrastructure sensor 10 may execute object detection processing and object recognition processing (hereinafter, simply referred to as object recognition processing). In that case, the infrastructure sensor information may indicate a type of the detected object (a person, a bicycle, or the like), the object position, which is a position of the detected object, and a movement direction and movement speed of the detected object. The infrastructure sensor 10 may execute object recognition and the like using a machine learning algorithm, such as deep learning. Further, the object recognition processing may be executed by the management device 50.

Here, the "type" is a category (a class) of an object (a moving object) determined in the object recognition processing. The type of the object can be determined using a feature amount extracted from an image captured by the infrastructure sensor 10. Further, the infrastructure sensor 10 may detect a vehicle type of the vehicle as the type of the object. The "vehicle type" can be determined using, for example, a recognition dictionary in which the feature amount and the vehicle type are associated with each other. Further, the "vehicle type" may be determined using, for example, a vehicle body number extracted by optical character recognition (OCR).

Further, the "object position" indicates a geographical position of a moving object when the object recognition processing is executed. The position may be, for example, latitude/longitude, or coordinates determined by a satellite positioning system (GNSS: Global Navigation Satellite System and the like). The object position can be calculated from, for example, a position of a pixel corresponding to an object in an image captured by the infrastructure sensor 10. For example, the object position may be calculated by associating in advance the position of the pixel in the image captured by the infrastructure sensor 10 with a position on the road.

The "movement direction" indicates a movement direction of a moving object (for example, north, south, east, and west) when the object recognition processing is executed. The movement direction can be calculated by, for example, associating in advance a direction in an image captured by the infrastructure sensor 10 with a bearing azimuth, and by detecting which direction the moving object has moved to in the image. The "movement speed" indicates movement speed of a moving object when the object recognition processing is executed. For example, the movement speed can be calculated by, for example, associating in advance the position of the pixel in the image captured by the infrastructure sensor 10 with the position on the road and by calculating a difference between positions of the moving object per unit time on the road.

The vehicle 20 can exist on the road on which the infrastructure sensor 10 is installed. The vehicle 20 may be, for example, a bus, a truck, and a passenger car. In the present embodiment, it is assumed that the vehicle 20 is stopped on the road on which the infrastructure sensor 10 is installed. However, the vehicle 20 may be traveling on the road. In the vehicle 20, the vehicle sensor 22, the display device 24, and the vehicle device 30 are connected to each other so as to be able to communicate with each other in a wired or wireless manner.

The vehicle sensors 22 are provided on, for example, a front surface, a rear surface, and side surfaces of the vehicle 20, and detect objects on side surfaces on which the vehicle sensors 22 are provided. Alternatively, one vehicle sensor 22 may detect the entire circumference of the vehicle 20 using an all-around camera and the like. The vehicle sensor 22 detects an object around the vehicle 20, and, in particular, a moving object (a moving body), which is a movable object. The vehicle sensor 22 is an object detection device including, for example, a camera or a sensor. The vehicle sensor 22 may be, for example, an in-vehicle camera. Examples of the moving object (the moving body) detected by the vehicle sensor 22 include a person, such as a pedestrian, a light vehicle, such as a bicycle, or a vehicle, such as an automobile or a motorcycle. Further, the vehicle sensor 22 detects a fixed object (such as a structure, a mailbox, a utility pole, a sign, or a building) around the vehicle 20.

The vehicle sensor 22 generates vehicle sensor information, which is information indicating a detected object. The vehicle sensor 22 transmits the generated vehicle sensor information to the vehicle device 30. When the vehicle sensor 22 is a camera, the vehicle sensor information may be, for example, image information indicating an image of a detected object. Further, the vehicle sensor 22 may execute the object detection processing and the object recognition processing. In that case, the vehicle sensor information may indicate the type of the detected object (a building, a person, a bicycle, or the like), the object position, which is a position of the detected object, and a movement direction and movement speed of the detected object. A method of calculating the object position, the movement direction, and the movement speed may be the same as the method using the infrastructure sensor 10 described above. The management device 50 or the vehicle device 30 may execute the object recognition processing.

The display device 24 may be, for example, a display. In the first embodiment, the display device 24 is provided on an outer surface of the vehicle 20. For example, the display devices 24 are provided on the front surface, the rear surface, and the side surfaces (the right side surface and the left side surface) of the vehicle 20. As described below, the display device 24 may display, for example, the vehicle sensor information generated by the vehicle sensor 22. Alternatively, the display device 24 may display, for example, the infrastructure sensor information generated by the infrastructure sensor 10. Details will be described below.

The vehicle device 30 may be, for example, a computer. The vehicle device 30 may receive vehicle sensor information from the vehicle sensor 22 and execute control for displaying the vehicle sensor information on the display device 24. Further, the vehicle device 30 may receive the infrastructure sensor information from the infrastructure sensor 10 and execute control for displaying the infrastructure sensor information on the display device 24. Details will be described below.

The management device 50 may be, for example, a computer. The management device 50 may be, for example, a server. The management device 50 may be, for example, a cloud server. The management device 50 manages the infrastructure sensor information, which is the information generated by the infrastructure sensor 10. Therefore, the management device 50 functions as a management system that manages a plurality of infrastructure sensors 10. The management device 50 has a database (DB) that stores the infrastructure sensor information. Further, the management device 50 may manage a dynamic map described below.

The dynamic map associates static information, which changes a little over time, with dynamic information where positions that change over time can be specified in, for example, a layer format. The static information may be, for example, three-dimensional map information (a three-dimensional map), and indicates a road surface, a lane, a structure, and the like. Examples of the dynamic information include quasi-static data indicating management traffic regulation schedules and road construction schedules, and the like, quasi-dynamic data indicating accidents and traffic congestion, and the like, and dynamic data indicating a pedestrian, a surrounding vehicle, signal information, and the like. On the dynamic map, when the static information and the dynamic information are associated with each other, the position data in the static information and the position data in the dynamic information correspond to each other. Therefore, when a certain position is designated on the dynamic map, static information and dynamic information corresponding to the position can be obtained.

Further, the dynamic map includes the position information of the infrastructure sensor 10. Then, the management device 50 associates a position of an object (a moving object) detected by the infrastructure sensor 10 with a position on the dynamic map. In the same manner, the management device 50 associates a position of an object (a moving object) detected by the vehicle sensor 22 with a position on the dynamic map. As such, the management device 50 can grasp a position of an object (a moving object, a moving body) detected by the infrastructure sensor 10 and the vehicle sensor 22 on the dynamic map, and the situation around the detected objects. Further, the management device 50 can grasp a position of an object (a moving object, a moving body) detected by the infrastructure sensor 10 and the vehicle sensor 22 at an arbitrary position on the dynamic map.

The management device 50 may receive vehicle sensor information from the vehicle sensor 22 and execute the control for displaying the vehicle sensor information on the display device 24. Further, the management device 50 may receive the infrastructure sensor information from the infrastructure sensor 10 and execute the control for displaying the infrastructure sensor information on the display device 24. Details will be described below.

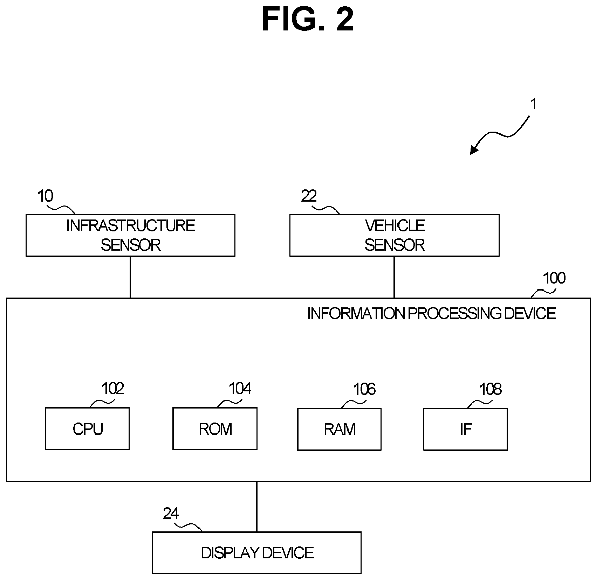

FIG. 2 is a diagram illustrating a hardware configuration of the display control system 1 according to the first embodiment. The display control system 1 includes an information processing device 100, infrastructure sensors 10, the vehicle sensor 22, and a display device 24. The information processing device 100 is communicably connected to the infrastructure sensor 10, the vehicle sensor 22, and the display device 24 in a wired or wireless manner.

The information processing device 100 can be provided in the management device 50 and the vehicle device 30 illustrated in FIG. 1. Further, when the infrastructure sensor 10 and the vehicle sensor 22 execute the image recognition processing and the like, the information processing device 100 may be provided in the infrastructure sensor 10 and the vehicle sensor 22. The information processing device 100 executes processing described below and executes processing for displaying information on the vehicle 20. In the first embodiment, the information processing device 100 executes the control for displaying information on the display device 24 provided on the surface of the vehicle 20. Details will be described below.

As a main hardware configuration, the information processing device 100 includes a central processing unit (CPU) 102, a read-only memory (ROM) 104, a random access memory (RAM) 106, and an interface unit (IF) 108. The CPU 102, the ROM 104, the RAM 106, and the interface unit 108 are connected to each other via a data bus and the like.

The CPU 102 has a function as an arithmetic device that executes control processing, arithmetic processing, and the like. The ROM 104 has a function used for storing a control program, an arithmetic program, and the like executed by the CPU 102. The RAM 106 has a function used for temporarily storing processing data and the like. The RAM 106 may have a database. As such, the information processing device 100 may implement a database. The interface unit 108 inputs/outputs a signal to and from the outside in a wired or wireless manner. Further, the interface unit 108 receives a data input by a user's operation and displays information to the user.

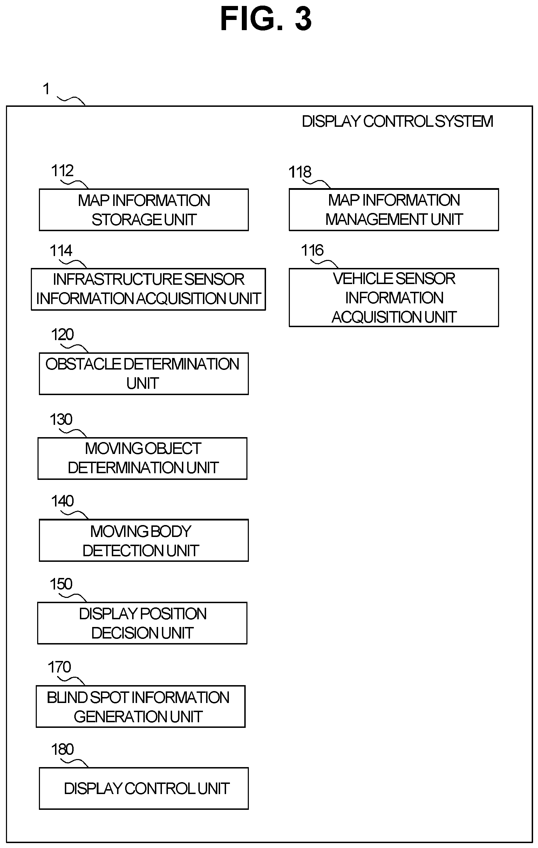

FIG. 3 is a functional block diagram illustrating a configuration of the display control system 1 according to the first embodiment. The display control system 1 includes a map information storage unit 112, an infrastructure sensor information acquisition unit 114, a vehicle sensor information acquisition unit 116, and a map information management unit 118. Further, the display control system 1 includes an obstacle determination unit 120, a moving object determination unit 130, a moving body detection unit 140, a display position decision unit 150, a blind spot information generation unit 170, and a display control unit 180.

These components can be implemented by the information processing device 100 illustrated in FIG. 2. These components are not limited to being physically implemented by one device, and may be implemented by a plurality of devices. These components may be implemented by a plurality of devices by, for example, cloud computing. Further, these components may be implemented by, for example, both the management device 50 and the vehicle device 30. These facts are also the same in other embodiments.

Further, these components can be implemented when, for example, the CPU 102 executes a program stored in the ROM 104. Further, each component may be implemented by recording a necessary program on an arbitrary non-volatile recording medium and installing it as necessary. Each component is not limited to being implemented by software as described above, and may be implemented by hardware, such as any kind of a circuit element. Further, each component of the display control system 1 may be implemented using a user-programmable integrated circuit, such as a field-programmable gate array (FPGA) or a microcomputer. In this case, a program composed of each of the above components may be implemented using an integrated circuit. These facts are also the same in other embodiments.

The map information storage unit 112 stores map information. Specifically, the map information storage unit 112 stores the above-described dynamic map. The map information storage unit 112 can be implemented by the ROM 104 illustrated in FIG. 2.

The infrastructure sensor information acquisition unit 114 acquires infrastructure sensor information. Specifically, the infrastructure sensor information acquisition unit 114 receives the infrastructure sensor information from the infrastructure sensor 10 via the network 2. The infrastructure sensor information acquisition unit 114 can be implemented by the interface unit 108 illustrated in FIG. 2. The infrastructure sensor information acquisition unit 114 acquires the infrastructure sensor information obtained when the infrastructure sensor 10 detects information around the vehicle 20 on the road.

The vehicle sensor information acquisition unit 116 acquires the infrastructure sensor information. Specifically, the vehicle sensor information acquisition unit 116 receives the vehicle sensor information from the vehicle sensor 22 via the network 2. The vehicle sensor information acquisition unit 116 can be implemented by the interface unit 108 illustrated in FIG. 2.

The map information management unit 118 manages map information. Specifically, the map information management unit 118 updates the dynamic map using the acquired infrastructure sensor information and vehicle sensor information. More specifically, the map information management unit 118 associates the position of the vehicle 20 with the position on the dynamic map using the infrastructure sensor information. The map information management unit 118 may associate the position of the vehicle 20 detected by the position detection device (the satellite positioning system and the like) mounted on the vehicle 20 with the position on the dynamic map.

Further, the map information management unit 118 associates a position of an object (a moving object) detected by the infrastructure sensor 10 with a position on the dynamic map. When the infrastructure sensor 10 simply captures an image of the surroundings only without executing the object recognition processing and the like, the map information management unit 118 may execute the above-described object recognition processing using the infrastructure sensor information, which is image information. For example, the map information management unit 118 may calculate the object position according to the position of the infrastructure sensor 10 and the position of the pixel corresponding to the object (the moving object) in the image.

Further, the map information management unit 118 may associate a position of an object (a moving object) detected by the vehicle sensor 22 with a position on the dynamic map. When the vehicle sensor 22 simply captures an image of the surroundings only without executing the object recognition processing and the like, the map information management unit 118 may execute the above-described object recognition processing using the vehicle sensor information, which is image information.

As such, the map information management unit 118 acquires the position information of the detected object (the moving object) on the dynamic map. Then, the map information management unit 118 maps the object to the position of the detected object (the vehicle 20, the moving object, and the like) on the dynamic map. As such, the dynamic map can form a virtual space that simulates an actual road condition.

The obstacle determination unit 120 determines whether an obstacle exists around the vehicle 20. Specifically, the obstacle determination unit 120 may determine, as an obstacle, a stationary object (a fixed object) existing at a position at which a distance from the vehicle 20 is equal to or shorter than a threshold value determined in advance (for example, several meters or less). The threshold value may differ depending on a size of the stationary object. In other words, the threshold value may be set such that it increases as the size of the stationary object becomes larger. Therefore, a relatively large stationary object may be determined as an obstacle even when the distance from the vehicle 20 is relatively long. On the other hand, a relatively small stationary object may not be determined as an obstacle even when the distance from the vehicle 20 is relatively short. The obstacle determination unit 120 determines an obstacle using at least one of the vehicle sensor information, the infrastructure sensor information, and the dynamic map.

The obstacle determination unit 120 may determine whether an obstacle exists around the vehicle 20 when viewed from the vehicle sensor 22. Specifically, the obstacle determination unit 120 determines, as an obstacle, a stationary object existing at a position at which a distance from the vehicle sensor 22 is equal to or shorter than the threshold value determined in advance. Alternatively, when the vehicle sensor information indicates an image, the obstacle determination unit 120 may determine, as an obstacle, a stationary object existing at a position at which a distance from the vehicle sensor 22 is equal to or shorter than the threshold value, and occupying a proportion determined advance (for example, 30%) or more in the image of the vehicle sensor information.

Further, the obstacle determination unit 120 may determine, as an obstacle, a stationary object existing at a position at which a distance from the vehicle sensor 22 is equal to or shorter than the threshold value determined in advance on the dynamic map to which the position of the vehicle 20 is mapped. Further, the obstacle determination unit 120 may determine, as an obstacle, a static obstacle estimated to occupy a proportion determined in advance or more on the image of the vehicle sensor information by further mapping, to the dynamic map, a photographing area corresponding to an angle of view of the vehicle sensor 22. Further, the obstacle determination unit 120 may map a stationary object determined as an obstacle to the dynamic map.

The moving object determination unit 130 determines whether a moving object exists in a blind spot area that becomes a blind spot due to an obstacle when viewed from the vehicle 20. Specifically, the moving object determination unit 130 calculates, as the blind spot area, an area blocked by an obstacle when viewed from the viewpoint of the vehicle 20. The moving object determination unit 130 determines whether a moving object exists in the calculated blind spot area.

The moving object determination unit 130 may determine whether a moving object exists in a blind spot area that becomes a blind spot due to an obstacle when viewed from the vehicle sensor 22. In this case, the moving object determination unit 130 calculates, as the blind spot area, an area blocked by an object when viewed from the viewpoint of the vehicle sensor 22.

The moving object determination unit 130 may calculate the blind spot area using the dynamic map. When the moving object determination unit 130 may calculate, as the blind spot area, an area that cannot be photographed due to an obstacle from the viewpoint of the vehicle sensor 22 in the photographing area that corresponds to the angle of view of the vehicle sensor 22 and that is mapped to the dynamic map. The moving object determination unit 130 maps the blind spot area to the dynamic map.

Then, the moving object determination unit 130 determines whether a moving object, such as a pedestrian or a bicycle, is mapped to the blind spot area that is mapped to the dynamic map. When the moving object is mapped to the blind spot area, the moving object determination unit 130 determines that the moving object exists in the blind spot area. The "moving object" in the processing of the moving object determination unit 130 may be an object recognized as a movable predetermined type of object, such as a "pedestrian" or a "bicycle" in the object recognition processing. Alternatively, the "moving object" in the processing of the moving object determination unit 130 may be an object of which the type is unknown, but any object that is moving on the image.

The moving body detection unit 140 detects a moving body traveling around the vehicle 20. More specifically, the moving body detection unit 140 may detect a moving body traveling on the opposite side of the obstacle with respect to the vehicle 20 in the periphery of the vehicle 20. The moving body detection unit 140 detects a position and a movement direction of the moving body with respect to the vehicle 20. The detected moving body may be, for example, a vehicle, such as an automobile or a motorcycle.

The moving body detection unit 140 may detect the moving body using the dynamic map. In this case, the moving body detection unit 140 detects the moving body traveling around the vehicle 20 on the dynamic map to which the moving body and the vehicle 20 are mapped. Then, the moving body detection unit 140 detects the position and the movement direction of the moving body with respect to the vehicle 20 on the dynamic map. The movement direction may be mapped to the dynamic map.

For example, the moving body detection unit 140 detects a moving body traveling toward the vehicle 20 at a position within a distance, determined in advance, from the front or the rear of the vehicle 20 on a road on which the vehicle 20 exists. Further, the moving body detection unit 140 detects a moving body traveling at a position within a distance, determined in advance (for example, within 2 m), from a side surface of the vehicle 20. The "distance determined in advance" may be changed according to movement speed of the moving body. For example, the "distance determined in advance" may be longer as the moving speed of the moving body is faster. Then, for example, the moving body detection unit 140 detects a moving body existing at the rear of the vehicle 20. Then, the moving body detection unit 140 detects a fact that the moving body is traveling from the rear of the vehicle 20 toward the right side surface thereof.

Further, the moving body detection unit 140 may detect the moving body using the vehicle sensor information. For example, the moving body detection unit 140 may detect the position and the movement direction of the moving body with respect to the vehicle 20 from a position at which the vehicle sensor 22 that has generated the vehicle sensor information is installed in the vehicle 20. For example, when the vehicle sensor 22 that has generated the vehicle sensor information indicating that the moving body is detected is installed at the rear of the vehicle 20, the moving body detection unit 140 may detect the fact that the moving body is traveling at the rear of the vehicle 20. Further, for example, when the vehicle sensor information indicates that the moving body is approaching the vehicle 20, the moving body detection unit 140 may detect the fact that the moving body is traveling toward the vehicle 20 from the rear of the vehicle 20.

The display position decision unit 150 decides, according to the position of the detected moving body, a display position at which information is displayed on a surface of the vehicle 20. Specifically, the display position decision unit 150 decides the display position according to a relative position of the detected moving body with respect to the vehicle 20. More specifically, the display position decision unit 150 decides, as the display position, the position on a surface of the vehicle 20 on a side of the relative position of the moving body with respect to the vehicle 20. Here, the display position decision unit 150 decides, as the display position, the position on the surface of the vehicle 20 that can be seen from the viewpoint of the moving body (a driver of the vehicle) on a side in the traveling direction of the moving body.

For example, when the moving body is detected at a position at the rear of the vehicle 20, the display position decision unit 150 decides a rear surface of the vehicle 20 as the display position. Then, the display position decision unit 150 decides to display the information on the display device 24 installed on the rear surface of the vehicle 20. Further, for example, when the moving body traveling from the rear of the vehicle 20 toward a side of a right side surface is detected, the display position decision unit 150 decides, as the display position, the right side surface of the vehicle 20. Then, the display position decision unit 150 decides to display the information on the display device 24 installed on the right side surface of the vehicle 20.

The blind spot information generation unit 170 generates blind spot information on the blind spot area based on the infrastructure sensor information. The blind spot information can be displayed on the display device 24. The blind spot information may indicate an image of a moving object existing in the blind spot. In this case, the blind spot information generation unit 170 generates the blind spot information indicating an image of a moving object existing in the blind spot area, which is indicated in the infrastructure sensor information. When the infrastructure sensor information indicates a photographed image in which a moving object is photographed, the blind spot information generation unit 170 may extract the photographed image of the moving object and generate blind spot information indicating the photographed image of the moving object.

Alternatively, the blind spot information generation unit 170 may generate the blind spot information indicating an abstract image corresponding to a type of moving object (a pedestrian, a bicycle, and the like) existing in the blind spot area, which is indicated in the infrastructure sensor information. Examples of the abstract image include an illustration image, an icon, and a pictogram. The blind spot information generation unit 170 may generate an abstract image using, for example, computer graphics. Further, the blind spot information generation unit 170 may generate the blind spot information using, for example, an abstract image prepared in advance in association with the type of the moving object. Alternatively, the blind spot information generation unit 170 may generate, for example, an abstract image similar to a feature of the moving object.

Alternatively, the blind spot information generation unit 170 may generate the blind spot information including text information. For example, when the vehicle 20 is a bus and a pedestrian exists in the blind spot area, the blind spot information generation unit 170 may generate text information, such as "There is a pedestrian over the bus. Please be careful."

The display control unit 180 executes control for displaying the blind spot information on the vehicle 20. Specifically, the display control unit 180 controls the display device 24. Then, the display control unit 180 executes the control for displaying the blind spot information on the display device 24. More specifically, the display control unit 180 transmits a sign including the blind spot information and a command indicating to display the blind spot information to the display device 24, which is decided by the display position decision unit 150. Upon receiving the signal, the display device 24 displays the blind spot information.

The display control unit 180 does not have to execute the control for displaying the blind spot information depending on the above determination result. Further, the display control unit 180 may execute the control for displaying information other than the blind spot information depending on the above determination result. The display control unit 180 may decide the information to be displayed on the display device 24 according to the above determination result.

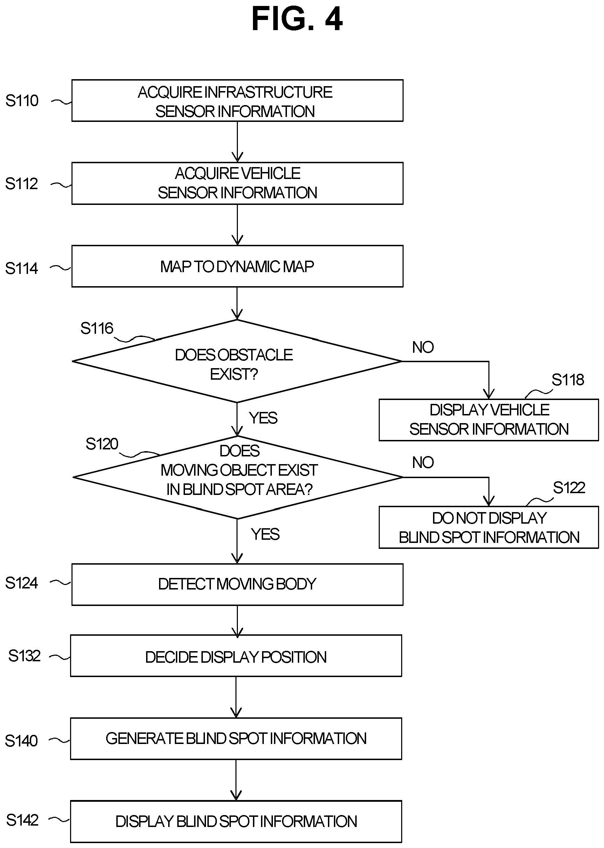

FIG. 4 is a flowchart illustrating a display control method executed by the display control system 1 according to the first embodiment. As described above, the infrastructure sensor information acquisition unit 114 acquires the infrastructure sensor information (step S110). As described above, the vehicle sensor information acquisition unit 116 acquires the vehicle sensor information (step S112). As described above, the map information management unit 118 maps, to the dynamic map, the object indicated in the infrastructure sensor information and the vehicle sensor information (step S114).

As described above, the obstacle determination unit 120 determines whether an obstacle exists around the vehicle 20 (step S116). When the obstacle determination unit 120 determines that no obstacle exists around the vehicle 20 (NO in S116), the display control unit 180 decides to display the vehicle sensor information on the display device 24 (step S118). In other words, when no obstacle exists around the vehicle 20, the display control unit 180 decides not to display the blind spot information generated based on the infrastructure information. Then, the display control unit 180 executes the control for displaying the vehicle sensor information, which is the information detected by the vehicle sensor 22, on the vehicle 20. In this case, the display control unit 180 (or the moving object determination unit 130) may determine that the vehicle sensor information has detected the moving object. When the moving object is detected, the display control unit 180 may execute the control for displaying vehicle sensor display information corresponding to the vehicle sensor information on the display device 24, decided by executing processes, which are substantially the same as those of S124 and S132 described below. The vehicle sensor display information may be generated by a process substantially the same as the process that generates the blind spot information.

On the other hand, when the obstacle determination unit 120 determines that an obstacle exists around the vehicle 20 (YES in S116), the display control unit 180 executes the control for displaying the blind spot information on the vehicle 20, instead of the vehicle sensor information. Then, the display control system 1 determines whether to display the blind spot information described below.

As described below, the moving object determination unit 130 determines whether a moving object exists in the blind spot area (step S120). When the moving object determination unit 130 determines that no moving object exists in the blind spot area (NO in S120), the display control unit 180 determines not to display the blind spot information on the vehicle 20 (step S122). On the other hand, when the moving object determination unit 130 determines that a moving object exists in the blind spot area (YES in S120), the display control unit 180 determines to display the blind spot information on the vehicle 20. When the moving body is not detected by the process of S124 described below, the display control unit 180 does not have to execute the control for displaying the blind spot information.

As described above, the moving body detection unit 140 detects a moving body traveling around the vehicle 20 (step S124). As described above, the display position decision unit 150 decides, according to the position of the detected moving body, a display position at which information is displayed on a surface of the vehicle 20 (step S132). As described above, the blind spot information generation unit 170 generates the blind spot information on the blind spot area based on the infrastructure sensor information (step S140). As described above, the display control unit 180 executes the control for displaying the blind spot information on the vehicle 20 (step S142).

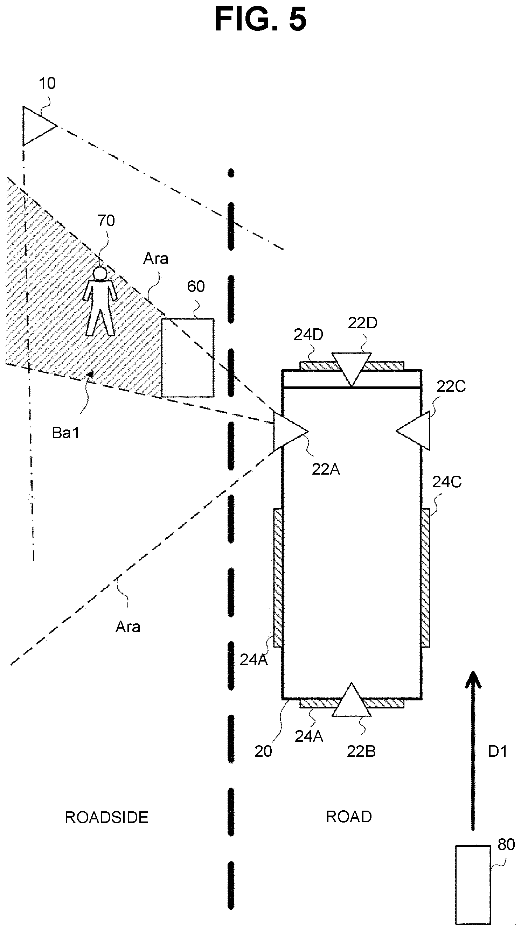

FIG. 5 is a diagram used for describing processing executed by the display control system 1 according to the first embodiment. FIG. 5 exemplifies a relative positional relationship between the vehicle 20, a stationary object 60 (an obstacle), a moving object 70, and a moving body 80 according to the first embodiment. Further, it can be said that FIG. 5 exemplifies a dynamic map to which the vehicle 20, the stationary object 60, the moving object 70, and the moving body 80 are mapped, according to the first embodiment.

In the example of FIG. 5, the vehicle 20 is stopped in a vicinity of a roadside which is on the left side of the road. Examples of the roadside include a sidewalk, a road shoulder, or a roadside belt. On the left side surface of the vehicle 20, a vehicle sensor 22A that detects (senses, photographs) the left side of the vehicle 20 and a display device 24A that displays information on the left side of the vehicle 20 are provided. Further, on the rear surface of the vehicle 20, a vehicle sensor 22B that detects (senses, photographs) the rear of the vehicle 20 and a display device 24B that displays information on the rear of the vehicle 20 are provided. Further, on the right side surface of the vehicle 20, a vehicle sensor 22C that detects (senses, photographs) the right hand of the vehicle 20 and a display device 24C that displays information on the right hand of the vehicle 20 are provided. Further, on the front surface of the vehicle 20, a vehicle sensor 22D that detects (senses, photographs) the front of the vehicle 20 and a display device 24D that displays information on the front of the vehicle 20 are provided.

Further, in the example of FIG. 5, the infrastructure sensor 10 is installed on the roadside. The infrastructure sensor 10 detects (senses, photographs) the road from the roadside. The vehicle 20 can be detected by the infrastructure sensor 10. The infrastructure sensor 10 is communicably connected to the management device 50.

Further, the stationary object 60 exists on the roadside. The stationary object 60 is positioned in the vicinity of the left side of the vehicle 20. Then, at least a part of the stationary object 60 is positioned in a photographing area Ara of the vehicle sensor 22A. Further, the moving object 70, such as a pedestrian, exists on the roadside. The moving object 70 is positioned on the opposite side of the vehicle 20 with respect to the stationary object 60. In particular, the moving object 70 is positioned on the opposite side of the vehicle sensor 22A with respect to the stationary object 60. Therefore, the moving object 70 exists at a position that is not detected by the vehicle sensor 22A because it is blocked by the stationary object 60. On the other hand, the moving object 70 exists at a position at which it can be detected by the infrastructure sensor 10. Therefore, the moving object 70 can be detected by the infrastructure sensor 10. Further, the stationary object 60 can be detected by at least one of the infrastructure sensor 10 and the vehicle sensor 22A.

Further, on the road on which the vehicle 20 exists, the moving body 80, such as a motorcycle, exists. The moving body 80 is traveling from the rear of the vehicle 20 toward the side of the right side surface of the vehicle 20 as represented by an arrow D1. The moving body 80 can be detected by at least one of the infrastructure sensor 10 and the vehicle sensor 22B.

The infrastructure sensor information acquisition unit 114 acquires the infrastructure sensor information indicating the vehicle 20, the moving object 70, and the stationary object 60 (step S110). The vehicle sensor information acquisition unit 116 acquires the vehicle sensor information indicating the stationary object 60 and the moving body 80 (step S112). Further, the map information management unit 118 updates the dynamic map using the infrastructure sensor information acquired from the infrastructure sensor 10 and the vehicle sensor information acquired from the vehicle sensor 22 (step S114). Therefore, the map information management unit 118 maps each object exemplified in FIG. 5 to the dynamic map. Then, the map information management unit 118 recognizes the positional relationship between each object exemplified in FIG. 5.

Further, the obstacle determination unit 120 determines the stationary object 60 as an obstacle (YES in S116). Further, the moving object determination unit 130 calculates, using, for example, the dynamic map, a blind spot area Ba1 (a hatched area in FIG. 5) blocked by the stationary object 60 (the obstacle) when viewed from the viewpoint of the vehicle sensor 22A. Then, the moving object determination unit 130 determines, using, for example, the dynamic map, that the moving object 70 exists in the blind spot area Ba1 (YES in S120).

The moving body detection unit 140 detects the moving body 80 (step S124). Then, the moving body detection unit 140 detects the fact that the moving body 80 is traveling from the rear of the vehicle 20 toward the side of the right side surface thereof. The display position decision unit 150 decides, according to the position of the moving body 80, to display the blind spot information on the display device 24B and the display device 24C, which are at positions that can be visually recognized from the moving body 80 (step S132). The blind spot information generation unit 170 generates the blind spot information, which is information on the moving object 70 existing in the blind spot area Ba1 (step S140). The display control unit 180 executes the control for displaying the blind spot information on the display device 24B and the display device 24C (step S142).

All of the components illustrated in FIG. 3 may be implemented by the information processing device 100 provided in the management device 50. Alternatively, from among the components illustrated in FIG. 3, the map information storage unit 112, the infrastructure sensor information acquisition unit 114, the map information management unit 118, the moving object determination unit 130, and the blind spot information generation unit 170 may be implemented by the information processing device 100 provided in the management device 50. Then, the remaining components, that is, the vehicle sensor information acquisition unit 116, the obstacle determination unit 120, the moving body detection unit 140, the display position decision unit 150, and the display control unit 180 may be implemented by the information processing device 100 provided in the vehicle device 30. In this case, when the obstacle determination unit 120 determines that an obstacle exists, the vehicle device 30 may inquire of the management device 50 whether a moving object 70 exists in the blind spot area. Then, when a moving object 70 exists in the blind spot area, the vehicle device 30 may receive the blind spot information from the management device 50. These facts are also the same in the other embodiments.

As described above, the display control system 1 according to the first embodiment is configured to generate, based on the infrastructure sensor information, the blind spot information on the blind spot area that becomes the blind spot due to the obstacle when viewed from the vehicle 20, and execute the control for displaying the blind spot information on the vehicle 20. Here, the blind spot information is generated using the infrastructure sensor information, and thus it is possible to appropriately generate the blind spot information on the area that becomes the blind spot due to the obstacle even when an obstacle exists around the vehicle 20. In other words, it is possible to appropriately generate the blind spot information even when the vehicle sensor 22 cannot detect the object in the blind spot area because the object is blocked by the obstacle. Therefore, the display control system 1 according to the first embodiment can display, on the vehicle 20, the blind spot information on the blind spot area that becomes the blind spot due to the obstacle even when an obstacle exists around the vehicle 20.

Further, the display control system 1 according to the first embodiment is configured to execute the control for displaying the blind spot information on the vehicle 20 when it is determined that an obstacle exists around the vehicle 20 when viewed from the vehicle sensor 22 mounted on the vehicle 20. As such, by displaying the blind spot information on the vehicle 20 when an obstacle exists around the vehicle 20, it is possible to display the blind spot information only when necessary. In other words, when no obstacle exists around the vehicle 20, it is not necessary to display the blind spot information on the vehicle 20. Therefore, it is possible to reduce a processing load. In particular, when the components of the display control system 1 are implemented by both the management device 50 and the vehicle device 30, it is not necessary for the vehicle device 30 to receive the blind spot information from the management device 50 when no obstacle exists around the vehicle 20, and thus it is possible to reduce a communication load and a data processing load.

Further, the display control system 1 according to the first embodiment is configured to execute the control for displaying the vehicle sensor information, which is the information detected by the vehicle sensor 22, on the vehicle 20 when it is determined that no obstacle exists around the vehicle 20. Here, when no obstacle exists, the vehicle sensor 22 can efficiently detect (photograph) the area that becomes the blind spot by the vehicle 20 itself. In this case, the vehicle sensor information obtained by the vehicle sensor 22 can be efficiently used. Therefore, when the vehicle sensor information can be efficiently used, by displaying the vehicle sensor information on the vehicle 20, it is possible to promote cooperation between the vehicle sensor 22 and the infrastructure sensor 10.

Further, the display control system 1 according to the first embodiment is configured to execute the control for displaying the blind spot information on the surface of the vehicle 20 when the moving object determination unit 130 determines that a moving object 70 exists in the blind spot area. With such a configuration, it is possible to display the blind spot information, which is information on the moving object 70 existing in the blind spot area, on the surface of the vehicle 20. Therefore, it is possible to notify surroundings of the vehicle of the fact that a moving object 70 exists in the blind spot area.

Further, the display control system 1 according to the first embodiment is configured to detect the moving body 80 traveling around the vehicle 20 and execute the control for displaying information on the display position, which is decided according to the position of the detected moving body 80. With such a configuration, it is possible to display the information at a position at which the information is easily viewed from the moving body 80 traveling around the vehicle 20. Further, as such, it is possible to appropriately warn the driver and the like of the moving body 80 that the moving object 70 exists over the vehicle 20.

### Second Embodiment

Next, a second embodiment will be described. The second embodiment differs from the first embodiment in that the former determines a possibility that the moving object 70 existing in the blind spot area and the moving body 80 traveling around the vehicle 20 may collide with each other. The configuration and hardware configuration of the display control system 1 according to the second embodiment are substantially the same as those illustrated in FIGS. 1 and 2, respectively, and thus the description thereof will be omitted.

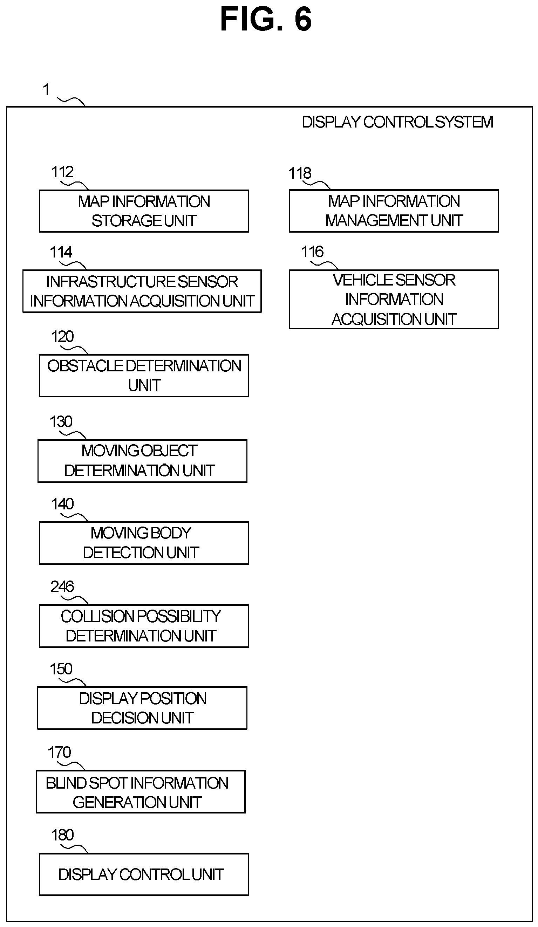

FIG. 6 is a functional block diagram illustrating the configuration of the display control system 1 according to the second embodiment. In the same manner as in the first embodiment, the display control system 1 includes the map information storage unit 112, the infrastructure sensor information acquisition unit 114, the vehicle sensor information acquisition unit 116, and the map information management unit 118. Further, in the same manner as in the first embodiment, the display control system 1 includes the obstacle determination unit 120, the moving object determination unit 130, the moving body detection unit 140, the display position decision unit 150, the blind spot information generation unit 170, and the display control unit 180. Further, the display control system 1 according to the second embodiment includes a collision possibility determination unit 246. Since the functions of the components other than the collision possibility determination unit 246 are substantially the same as those of the first embodiment, the description thereof will be omitted as appropriate.

The collision possibility determination unit 246 determines whether there is a possibility that the moving body 80 traveling around the vehicle 20 and the moving object 70 existing in the blind spot area may collide with each other. Specifically, the collision possibility determination unit 246 determines whether there is a possibility that the moving body 80 and the moving object 70 may collide with each other according to the movement direction of the moving body 80 and the movement direction of the moving object 70.

More specifically, the collision possibility determination unit 246 calculates the movement direction of the moving object 70 existing in the blind spot area. The collision possibility determination unit 246 may calculate the movement direction of the moving object 70 using the dynamic map or the infrastructure sensor information. The collision possibility determination unit 246 may calculate the movement direction of the moving object 70 from the "movement direction" of the moving object existing in the blind spot area, indicated in the dynamic map or the infrastructure sensor information. The collision possibility determination unit 246 may map the movement direction of the moving object 70 to the dynamic map. When the map information management unit 118 maps the movement direction of the moving object 70 to the dynamic map, the collision possibility determination unit 246 may calculate the movement direction of the moving object 70 using the dynamic map. The above-described moving object determination unit 130 may determine the movement direction of the moving object 70. The moving body detection unit 140 calculates the movement direction of the moving body 80.

Further, the collision possibility determination unit 246 determines whether the movement direction of the moving body 80 detected by the moving body detection unit 140 and the movement direction of the moving object 70 intersect with each other. Specifically, the collision possibility determination unit 246 determines whether the movement direction of the moving body 80 and the movement direction of the moving object 70 intersect with each other, using the dynamic map to which the movement direction of the moving body 80 and the movement direction of the moving object 70 are mapped. More specifically, the collision possibility determination unit 246 determines, on the dynamic map, whether a trace (a straight line) extending from the position of the moving body 80 toward the movement direction of the moving body 80 and a trace (a straight line) extending from the position of the moving object 70 toward the movement direction of the moving object 70 intersect with each other.

Further, when the movement direction of the moving body 80 and the movement direction of the moving object 70 intersect with each other, the collision possibility determination unit 246 calculates a time at which each of the moving body 80 and the moving object 70 is estimated to reach an intersection point at which the movement direction of the moving body and the movement direction of the moving object 70 intersect with each other. Specifically, the collision possibility determination unit 246 calculates time T1 at which the moving body 80 is estimated to reach the intersection point from the movement speed of the moving body 80 and a distance from the position of the moving body 80 to the intersection point. In the same manner, the collision possibility determination unit 246 calculates time T2 at which the moving object 70 is estimated to reach the intersection point from the movement speed of the moving object 70 and a distance from the position of the moving object 70 to the intersection point. Then, when a difference between time T1 and time T2 is equal to or lower than a threshold value determined in advance, the collision possibility determination unit 246 determines that there is a possibility that the moving body 80 and the moving object 70 may collide with each other. When the movement direction of the moving body 80 and the movement direction of the moving object 70 intersect with each other, the collision possibility determination unit 246 may simply determine that there is a possibility that the moving body 80 and the moving object 70 may collide with each other.

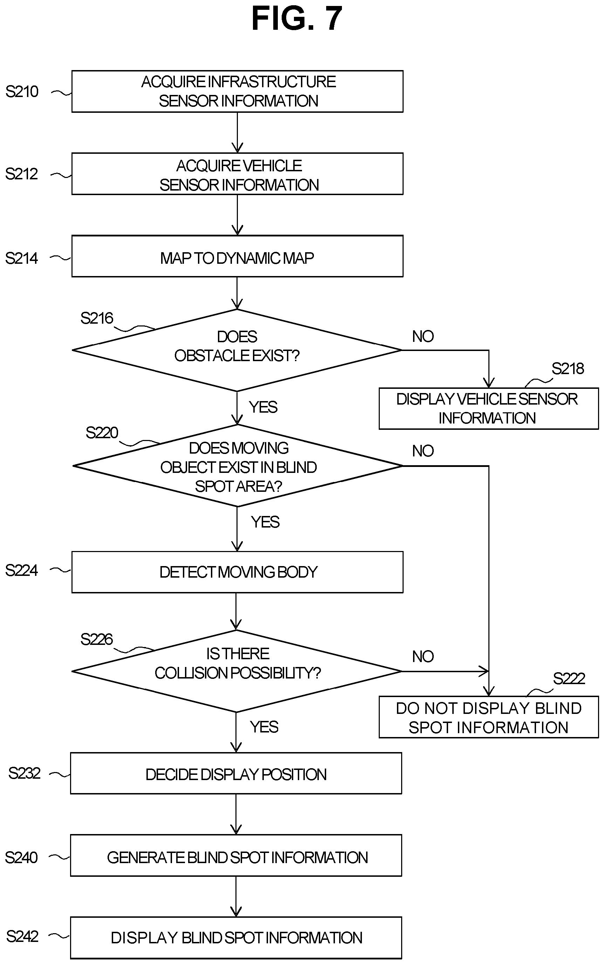

FIG. 7 is a flowchart illustrating a display control method executed by the display control system 1 according to the second embodiment. In the same manner as in the first embodiment, the infrastructure sensor information acquisition unit 114 acquires the infrastructure sensor information (step S210). In the same manner as in the first embodiment, the vehicle sensor information acquisition unit 116 acquires the vehicle sensor information (step S212). In the same manner as in the first embodiment, the map information management unit 118 maps, to the dynamic map, the object indicated in the infrastructure sensor information and the vehicle sensor information (step S214).

In the same manner as in the first embodiment, the obstacle determination unit 120 determines whether an obstacle exists around the vehicle 20 (step S216). When the obstacle determination unit 120 determines that no obstacle exists around the vehicle 20 (NO in S216), the display control unit 180 decides to display the vehicle sensor information on the display device 24 (step S218). The processing for displaying the vehicle sensor information on the display device 24 is the same as that in the first embodiment, and thus the description thereof will be omitted.

On the other hand, when the obstacle determination unit 120 determines that an obstacle exists around the vehicle 20 (YES in S216), the display control unit 180 executes the control for displaying the blind spot information on the vehicle 20, instead of the vehicle sensor information. Then, the display control system 1 determines whether to display the blind spot information as described below.

In the same manner as in the first embodiment, the moving object determination unit 130 determines whether a moving object 70 exists in the blind spot area (step S220). When the moving object determination unit 130 determines that no moving object 70 exists in the blind spot area (NO in S220), the display control unit 180 determines not to display the blind spot information on the vehicle 20 (step S222). On the other hand, when the moving object determination unit 130 determines that the moving object 70 exists in the blind spot area (YES in S220), the collision possibility determination unit 246 determines that there is a possibility that the moving body 80 and the moving object 70 may collide with each other.

In the same manner as in the first embodiment, the moving body detection unit 140 detects the moving body 80 traveling around the vehicle 20 (step S224). As described above, the collision possibility determination unit 246 determines whether there is a possibility that the moving body 80 traveling around the vehicle 20 and the moving object 70 existing in the blind spot area may collide with each other (step S226). When the collision possibility determination unit 246 determines that there is no possibility that the moving body 80 and the moving object 70 may collide with each other (NO in S226), the display control unit 180 determines not to display the blind spot information on the vehicle 20 (step S222).

On the other hand, when the collision possibility determination unit 246 determines that there is a possibility that the moving body 80 and the moving object 70 may collide with each other (YES in S226), the display control unit 180 determines to display the blind spot information on the vehicle 20. In this case, in the same manner as in the first embodiment, the display position decision unit 150 decides, according to the position of the detected moving body 80, a display position at which the information is displayed on a surface of the vehicle 20 (step S232). In the same manner as in the first embodiment, the blind spot information generation unit 170 generates the blind spot information on the blind spot area based on the infrastructure sensor information (step S240).

The blind spot information generation unit 170 may generate the blind spot information including text information. For example, when the vehicle 20 is a bus and a pedestrian (a moving object 70) existing in the blind spot area is moving to the side of the movement direction of the moving body 80, the blind spot information generation unit 170 may generate text information, such as "A pedestrian is popping out from over the bus. Please be careful." Then, in the same manner as in the first embodiment, the display control unit 180 executes the control for displaying the blind spot information on the vehicle 20 (step S242).

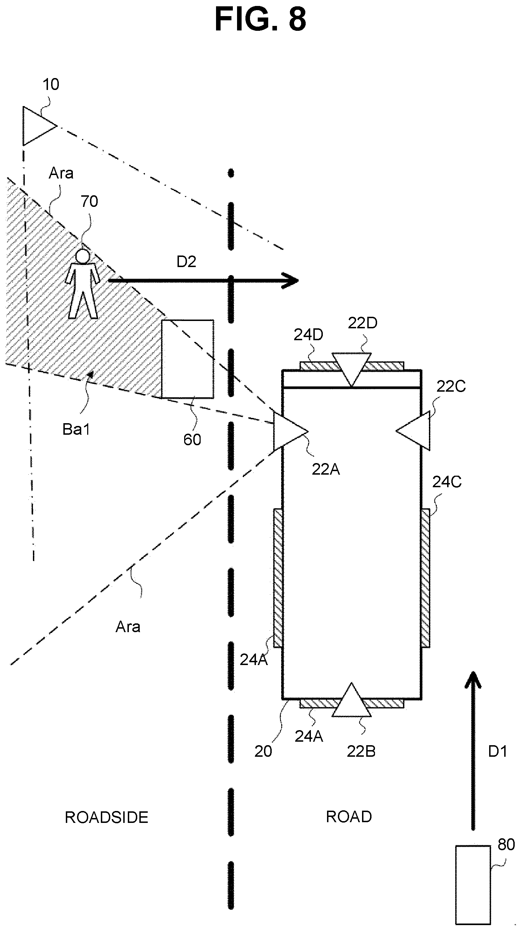

FIG. 8 is a diagram used for describing processing executed by the display control system 1 according to the second embodiment. FIG. 8 exemplifies a relative positional relationship, according to the second embodiment, between the vehicle 20, the stationary object 60 (an obstacle), the moving object 70, and a moving body 80. Further, it can be said that FIG. 8 exemplifies, according to the second embodiment, a dynamic map to which the vehicle 20, the stationary object 60, the moving object 70, and the moving body 80 are mapped. Hereinafter, differences between FIG. 5 and FIG. 8 will be mainly described. Here, the relative positional relationship between the vehicle 20, the stationary object 60, and the moving body 80 is substantially the same as that in the first embodiment.

The moving object 70, such as a pedestrian, exists on the roadside. The moving object 70 is positioned on the opposite side of the vehicle 20 with respect to the stationary object 60. Then, the moving object 70 is moving from the left side to the right side in front of the vehicle 20, as represented by an arrow D2. In other words, the moving object 70 is moving from the road side, that is, the left front side of the vehicle 20, toward the center of the road, that is, the right front side of the vehicle 20. In other words, the moving object 70 is moving toward the side of the movement direction of the moving body 80. The movement direction of the moving object 70 can be detected by the infrastructure sensor 10.

The moving object determination unit 130 determines, using, for example, the dynamic map, that the moving object 70 exists in the blind spot area Ba1 (YES in S120). Then, the moving body detection unit 140 detects the moving body 80 (step S124). Then, the moving body detection unit 140 detects the fact that the moving body 80 is traveling from the rear of the vehicle 20 toward the right side surface thereof.

Further, the collision possibility determination unit 246 determines that the moving object 70 in the blind spot area Ba1 is moving from the left front side of the vehicle 20 toward the right front side of the vehicle 20. Then, the collision possibility determination unit 246 determines whether there is a possibility that the moving body 80 and the moving object 70 may collide with each other (step S226), and determines that the moving body 80 and the moving object 70 may collide with each other (YES in S226). Therefore, in the same manner as in the example of FIG. 5, the display control unit 180 executes the control for displaying the blind spot information on the display device 24B and the display device 24C (step S242).

The display control system 1 according to the second embodiment is configured to execute the control for displaying the blind spot information on the surface of the vehicle 20 when the collision possibility determination unit 246 determines that there is a possibility that the moving body 80 traveling around the vehicle 20 and the moving object 70 existing in the blind spot area may collide with each other. With such a configuration, it is possible to more appropriately warn a driver and the like of the moving body 80 that there is a possibility of the collision between the moving body 80 and the moving object 70. In other words, when the possibility that the moving body 80 and the moving object 70 may collide with each other is higher, by warning the driver and the like of the moving body 80 that the moving object 70 will pop out, it is possible to draw attention of the driver and the like of the moving body 80.

### Third Embodiment

Next, a third embodiment will be described. In the third embodiment, the image processing is executed according to the movement direction of the moving object 70 existing in the blind spot area. The configuration and hardware configuration of the display control system 1 according to the third embodiment are substantially the same as those illustrated in FIGS. 1 and 2, respectively, and thus the description thereof will be omitted.

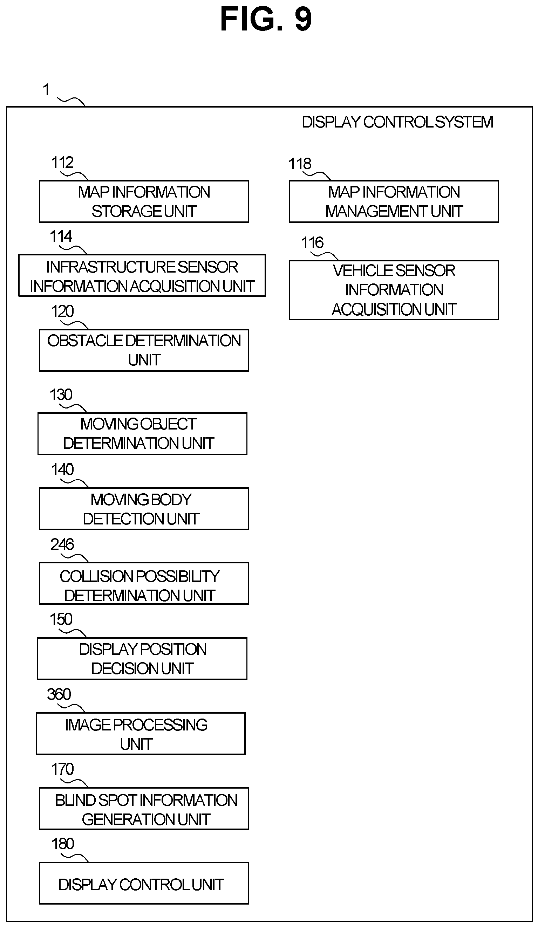

FIG. 9 is a functional block diagram illustrating the configuration of the display control system 1 according to the third embodiment. In the same manner as in the first embodiment and the second embodiment, the display control system 1 includes the map information storage unit 112, the infrastructure sensor information acquisition unit 114, the vehicle sensor information acquisition unit 116, and the map information management unit 118. Further, in the same manner as in the first embodiment and the second embodiment, the display control system 1 includes the obstacle determination unit 120, the moving object determination unit 130, the moving body detection unit 140, the display position decision unit 150, the blind spot information generation unit 170, and the display control unit 180. Further, in the same manner as in the second embodiment, the display control system 1 includes the collision possibility determination unit 246. Further, the display control system 1 according to the third embodiment includes an image processing unit 360. Since the functions of the components other than the image processing unit 360 are substantially the same as those of the first embodiment and the second embodiment, the description thereof will be omitted as appropriate.

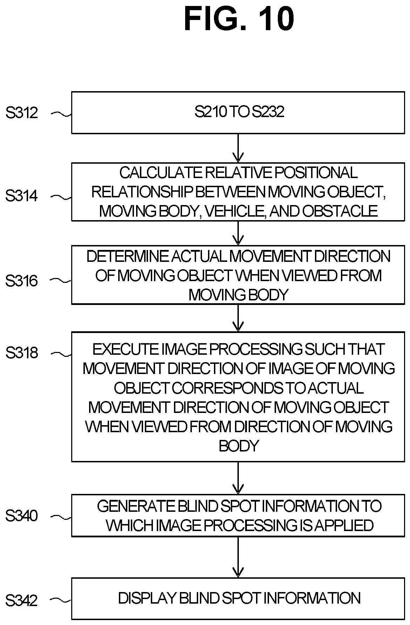

When the blind spot information is displayed on the surface of the vehicle 20, the image processing unit 360 executes the image processing such that the movement direction of the image of the moving object 70 corresponds to an actual movement direction of the moving object 70 when it is assumed that an actual moving object 70 is viewed from a viewpoint of the moving body 80 traveling around the vehicle 20. For example, in the case where the actual movement direction of the moving object 70 when it is assumed that the actual moving object 70 is viewed from the viewpoint of the moving body 80 is the right direction when viewed from the viewpoint of the moving body 80, the image processing unit 360 executes the image processing such that the image of the moving object 70 moves in the right direction in the blind spot information. Since the vehicle 20 and the obstacle exist between the moving body 80 and the moving object 70, the possibility that the moving object 70 cannot be actually visually recognized from the moving body 80 is high. However, in the third embodiment, the image (the blind spot information) of the moving object 70 is displayed on the surface of the vehicle 20 as if the vehicle 20 and the obstacle do not exist. Specific processing of the image processing unit 360 will be described below with reference to FIG. 10 and the like. The blind spot information generation unit 170 may have the function of the image processing unit 360.

FIG. 10 is a flowchart illustrating a display control method executed by the display control system 1 according to the third embodiment. The display control system 1 executes substantially the same processes as the above-described S210 to S232 (step S312). As described above, the position of the vehicle 20, the position of the obstacle, the position and the movement direction of the moving object 70, and the position and the movement direction of the moving body 80 can be mapped to the dynamic map by the processes of S214 and the like.

The image processing unit 360 calculates the relative positional relationship between the moving object 70, the moving body 80, the vehicle 20, and the obstacle (step S314). Specifically, the image processing unit 360 may calculate the relative positional relationship between the moving object 70, the moving body 80, the vehicle 20, and the obstacle using the dynamic map. Here, since the position of the moving object 70, the position of the moving body 80, the position of the vehicle 20, and the position of the obstacle are mapped to the dynamic map, the image processing unit 360 can calculate the relative positional relationship between the moving object 70, the moving body 80, the vehicle 20, and the obstacle.

The image processing unit 360 determines the actual movement direction of the moving object 70 when viewed from the moving body 80 (step S316). Specifically, the image processing unit 360 determines, using the dynamic map, the actual movement direction of the moving object 70 when it is assumed that the actual moving object 70 is viewed from the viewpoint of the moving body 80. Here, since the position and the movement direction of the moving object 70 and the position and the movement direction of the moving body 80 on the actual road are mapped to the dynamic map, the image processing unit 360 can determine the actual movement direction of the moving object 70 when viewed from the moving body 80. More specifically, the image processing unit 360 determines which direction the movement direction of the moving object 70 corresponds to when viewed from the viewpoint of the moving body 80 on the dynamic map.

For example, the image processing unit 360 determines whether the movement direction of the moving object 70 when viewed from the viewpoint of the moving body 80 corresponds to any of the right direction, the left direction, an approaching direction, and a moving-away direction. Further, for example, the image processing unit 360 determines whether the movement direction of the moving object 70 when viewed from the viewpoint of the moving body 80 corresponds to a combination of any of the right direction, the left direction, the approaching direction, and the moving-away direction. For example, in the example of FIG. 8, when the moving body 80 is positioned at the rear of the vehicle 20, the image processing unit 360 determines that the movement direction of the moving object 70 when viewed from the viewpoint of the moving body 80 is the right direction. Further, in the example of FIG. 8, when the moving body 80 is positioned in the vicinity of the right side surface of the vehicle 20, the image processing unit 360 determines that the movement direction of the moving object 70 when viewed from the viewpoint of the moving body 80 is a direction of approaching the right side.

The image processing unit 360 executes the image processing such that the movement direction of the image of the moving object 70 corresponds to the actual movement direction of the moving object 70 when viewed from the direction of the moving body 80 on a display screen displayed on the display device 24 (step S318). In other words, the image processing unit 360 executes the image processing such that the image, in which the moving object 70 is viewed to move as if the obstacle and the vehicle 20 do not exist from a viewpoint of the moving body 80, is generated. Here, the image processing unit 360 may execute the image processing using the infrastructure sensor information indicating the image of the moving object 70. Alternatively, the image processing unit 360 may generate an abstract image using computer graphics. Details will be described below.

Then, the blind spot information generation unit 170 generates the blind spot information to which the image processing is applied by the image processing unit 360 (step S340). Then, in the same manner as in the above-described embodiments, the display control unit 180 executes the control for displaying the blind spot information on the display device 24 provided on the vehicle 20 (step S342).

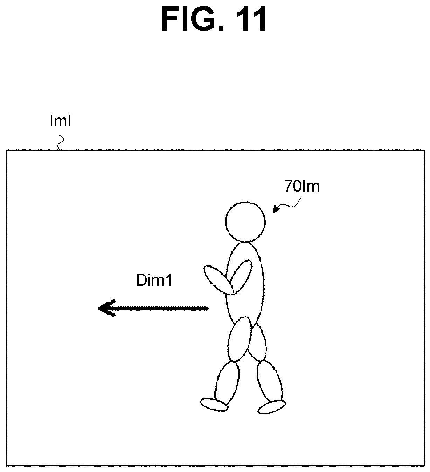

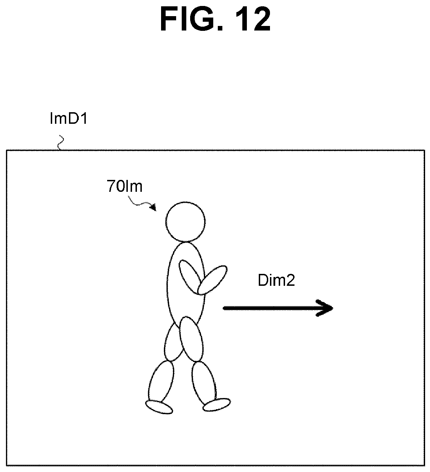

FIGS. 11 and 12 are diagrams used for describing the image processing method using the infrastructure sensor information according to the third embodiment. FIG. 11 is a diagram illustrating an infrastructure sensor image Iml indicated in the infrastructure sensor information. Here, the infrastructure sensor image Iml illustrated in FIG. 11 corresponds to an image obtained when the infrastructure sensor 10 photographs the moving object 70 from the viewpoint of the infrastructure sensor 10 exemplified in FIG. 8. Further, FIG. 12 is a diagram illustrating a display image ImD1 to which the image processing described below is applied.

In the infrastructure sensor image Iml, the movement direction of a moving object image 701m, which is an image of the moving object 70, the left direction, as represented by an arrow Dim1. On the other hand, as described above, when the moving body 80 is positioned at the rear of the vehicle 20, the actual movement direction of the moving object 70 when viewed from the viewpoint of the moving body 80 is the right direction. Therefore, the movement direction of the moving object image 701m in the infrastructure sensor image Iml is opposite to the actual movement direction of the moving object 70 when viewed from the viewpoint of the moving body 80 when the moving body 80 is positioned at the rear of the vehicle 20.

Here, the viewpoint on which the infrastructure sensor 10 can photograph the moving object 70 existing in the blind spot area is often on the opposite side to the vehicle 20 with respect to the obstacle. In this case, the movement direction of the moving object 70 when viewed from the viewpoint of the infrastructure sensor 10 may be opposite to the movement direction of the moving object 70 when viewed from the viewpoint opposite to the infrastructure sensor 10 with respect to the vehicle 20 and the obstacle. In the example of FIG. 8, the infrastructure sensor 10 photographs the moving object 70 from the viewpoint on which the blind spot area Ba1 can be photographed, and the moving body 80 is positioned on the opposite side to the infrastructure sensor 10 with respect to the vehicle 20 and the obstacle (the stationary object 60). In this case, the movement direction of the moving object image 701m in the infrastructure sensor image Iml is opposite to the movement direction of the moving object 70 when viewed from the viewpoint of the moving body 80.

In such a case, as illustrated in FIG. 12, the image processing unit 360 extracts the moving object image 701m from the infrastructure sensor image Iml and executes the image processing, such as inversing the right and the left, to generate the display image ImD1. Here, the moving object image 701m in which the right and the left are inverted moves in the right direction in the display image ImD1 as represented by an arrow Dim2. Therefore, the movement direction of the moving object image 701m in the display image ImD1 corresponds to the movement direction of the moving object 70 when viewed from the viewpoint of the moving body 80 positioned at the rear of the vehicle 20. The image processing unit 360 may simply inverse the right and the left of the infrastructure sensor image Iml without extracting the moving object image 701m from the infrastructure sensor image Iml. Further, the image processing unit 360 may change, in consideration of a perspective method, the size of the moving object image 701m according to the position at which the moving object 70 exists. In other words, the image processing unit 360 may reduce the size of the displayed moving object image 701m as the actual distance between the moving object 70 and the moving body 80 (or the vehicle 20) increases.

Further, the image processing unit 360 may acquire, from the dynamic map, a three-dimensional image when the direction of the moving object 70 is viewed from the viewpoint of the moving body 80 in a state where the vehicle 20 and the obstacle (the stationary object 60) do not exist. Then, the image processing unit 360 may generate the display image ImD1 by superimposing the moving object image 701m in which the right and the left are inverted on the acquired three-dimensional image. The display image ImD1 is actually displayed on the display device 24B that can be visually recognized from the moving body 80. Therefore, the image processing unit 360 may superimpose the moving object image 701m in which the right and the left are inverted on the three-dimensional image from the viewpoint of the display device 24B. At this time, the image processing unit 360 may change, in consideration of the perspective method, the size of the moving object image 701m according to the position at which the moving object 70 exists. The display image generated by executing the image processing in such a manner is displayed on the display device 24B installed at the rear of the vehicle 20.

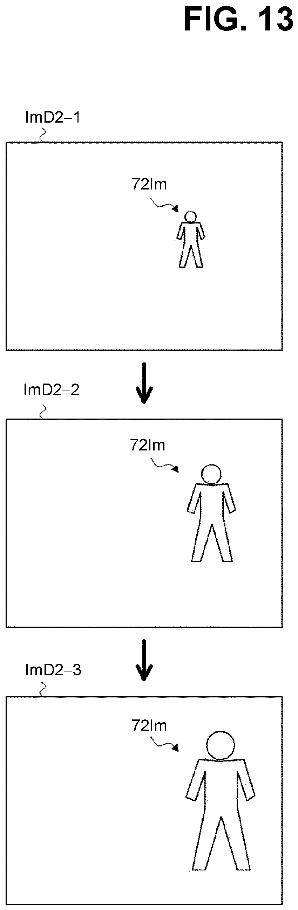

FIG. 13 is a diagram used for describing the image processing method using computer graphics according to the third embodiment. As described above, in the example of FIG. 8, when the moving body 80 is positioned in the vicinity of the right side surface of the vehicle 20, the movement direction of the moving object 70 when viewed from the viewpoint of the moving body 80 corresponds to the approaching direction. Here, when the moving object 70 approaches a certain viewpoint, from that viewpoint, the moving object 70 seems to gradually become larger. Further, with respect to the viewpoint, the moving object 70 often faces its front side. In such a case, the method of inversing the moving object image 701m of the infrastructure sensor image Iml that has been described with reference to FIGS. 11 and 12 may not suitably generate a display image corresponding to the viewpoint from the moving body 80.

In such a case, the image processing unit 360 generates an abstract image 721m corresponding to the moving object 70 using computer graphics. The abstract image 721m corresponds to an image in which the moving object 70 faces the front. The abstract image 721m may be prepared in advance in association with the type of the moving object 70 (a pedestrian, a bicycle, or the like), or may be similar to a feature of the moving object 70. Then, the image processing unit 360 executes the image processing such that the abstract image 721m in the display image ImD2 becomes larger over time. In other words, the image processing unit 360 executes the image processing such that the abstract image 721m moves according to an actual movement when the moving object 70 is viewed from the viewpoint of the moving body 80. At this time, in the same manner as in the example of FIG. 12, the image processing unit 360 may acquire, from the dynamic map, a three-dimensional image when the direction of the moving object 70 is viewed from the viewpoint of the moving body 80 in the state where the vehicle 20 and the obstacle (the stationary object 60) do not exist. Then, the image processing unit 360 may generate the display image ImD2 by superimposing the abstract image 721m on the acquired three-dimensional image. Further, the image processing unit 360 may execute the image processing such that the abstract image 721m moves corresponding to a walking operation.

In the example of FIG. 13, it is assumed that the displayed images are displayed in an order of a displayed image ImD2-1, a displayed image ImD2-2, and a displayed image ImD2-3. In this case, as illustrated in FIG. 13, the size of the abstract image 721m in the display image ImD2-2 is larger than the size of the abstract image 721m in the display image ImD2-1. Then, the size of the abstract image 721m in the display image ImD2-3 is larger than the size of the abstract image 721m in the display image ImD2-2. Therefore, the movement direction of the abstract image 721m in the display image ImD2 corresponds to a direction from a back side to a front side in the display image ImD2, that is, the approaching direction. Therefore, in the example of FIG. 8, the movement direction of the abstract image 721m in the display image ImD2 corresponds to the movement direction of the moving object 70 when viewed from the viewpoint of the moving body 80 positioned at the right side surface of the vehicle 20. Then, the display image ImD2 is displayed on the display device 24C installed on the right side surface of the vehicle 20.

In the example described with reference to FIGS. 11 and 12, when the movement direction of the moving object 70 when viewed from the viewpoint of the moving body 80 is opposite to the movement direction of the image of the moving object 70 in the infrastructure sensor image Iml, the image processing unit 360 executes the image processing such that the right and the left of the image of the moving object 70 obtained from the infrastructure sensor 10 are inversed. However, the image processing method is not limited to such a configuration. When the movement direction of the moving object 70 when viewed from the viewpoint of the moving body 80 is opposite to the movement direction of the image of the moving object 70 in the infrastructure sensor image Iml, the image processing unit 360 may generate the abstract image 721m corresponding to the moving object 70. Then, the image processing unit 360 may execute the image processing such that the abstract image 721m moves in the movement direction of the moving object 70 when viewed from the viewpoint of the moving body 80. Such a configuration is particularly efficient when an image is not indicated in the infrastructure sensor information.

Further, in the example described with reference to FIG. 13, when the movement direction of the moving object 70 when viewed from the viewpoint of the moving body 80 is the approaching direction, the image processing unit 360 generates the abstract image 721m corresponding to the moving object 70. However, the image processing method is not limited to such a configuration. The image processing unit 360 may execute the image processing by analyzing the image of the moving object 70 in the infrastructure sensor image Iml and generating the image of the front surface of the moving object 70. Then, the image processing unit 360 may execute the image processing such that the image of the front surface of the moving object 70 generated from the infrastructure sensor image Iml gradually becomes larger over time.

The display control system 1 according to the third embodiment is configured to execute the image processing such that, the movement direction of the image of the moving object 70 when the blind spot information is displayed on the surface of the vehicle 20 corresponds to the actual movement direction of the moving object 70 when it is assumed that the actual moving object 70 is viewed from the viewpoint of the moving body 80. As such, in comparison with the case where the image of the moving object 70 indicated in the infrastructure sensor information is viewed as it is, it is possible to set the movement direction of the image of the moving object 70 when the blind spot information is displayed on the surface of the vehicle 20 to a more suitable direction.

Here, in the example of FIGS. 11 and 12, the movement direction of the image of the moving object 70 in the infrastructure sensor image Iml is opposite to the actual movement direction of the moving object 70 when viewed from the viewpoint of the moving body 80. In this case, when the infrastructure sensor image Iml is displayed as it is, there is a possibility that the driver and the like of the moving body 80 may mistakenly recognize that the moving object 70 is moving in a direction in which it may not collide with the moving body 80. In this case, even when the blind spot information is displayed on the display device 24 of the vehicle 20, the driver and the like of the moving body 80 may not be appropriately warned of the possibility that the moving body 80 may collide with the moving object 70. On the other hand, in the third embodiment, in the blind spot information displayed on the display device 24, the movement direction of the image of the moving object 70 corresponds to the actual movement direction of the moving object 70 when viewed from the viewpoint of the moving body 80. Therefore, it is possible to display, on the surface of the vehicle 20, an image that is more realistic for the driver and the like of the moving body 80. Therefore, it is possible to more effectively warn that there is the possibility that the moving body 80 may collide with the moving object 70.

### Fourth Embodiment

Next, a fourth embodiment will be described. The fourth embodiment differs from the other embodiments described above in that the vehicle 20 does not have the display device 24.

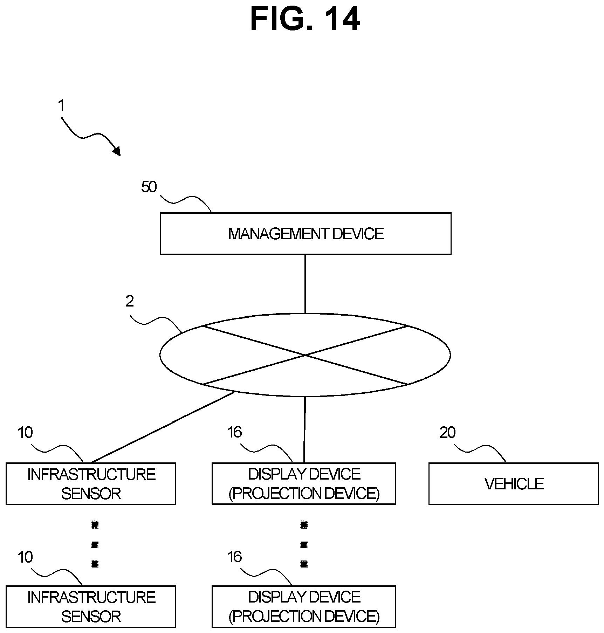

FIG. 14 is a diagram illustrating the display control system 1 according to the fourth embodiment. The display control system 1 according to the fourth embodiment includes the management device 50, the plurality of infrastructure sensors 10, a plurality of display devices 16, and the vehicle 20. Here, unlike the above-described embodiments, the vehicle 20 does not have to be provided with the vehicle sensor, the display device, and the vehicle device. Therefore, the vehicle 20 does not have to be communicably connected to the management device 50 and the like. The configurations of the management device 50 and the infrastructure sensor 10 are substantially the same as those of the above-described embodiment, and thus the description thereof will be omitted as appropriate.

Further, the components of the display control system 1 according to the fourth embodiment are substantially the same as those illustrated in FIG. 8, and thus the description thereof will be omitted. Here, the components of the display control system 1 according to the fourth embodiment can be implemented by the information processing device 100 of the management device 50. Further, the display control system 1 according to the fourth embodiment does not have to include the vehicle sensor information acquisition unit.

The display devices 16 are arranged at different positions from each other. For example, the display device 16 is installed around a road. Further, for example, the display device 16 may be installed in a vicinity of the road at intervals of 50 m to 100 m. The display device 16 is communicably connected to the management device 50 in a wired or wireless manner. The display device 16 may be communicably connected to the infrastructure sensor 10 in a wired or wireless manner.

The display device 16 is a projection device, such as a projector. The display device 16 displays an image on a surface of an object by projecting the image toward the object. In particular, the display device 16 displays an image on the surface of the vehicle 20 by projecting the image toward the vehicle 20 in the vicinity thereof. Further, the display device 16 can change a projection direction (an elevation angle, an azimuth angle, and the like) in order to project the image toward an object, which is a projection target, in the vicinity thereof. For example, the display device 16 can adjust the projection direction by controlling from the management device 50.

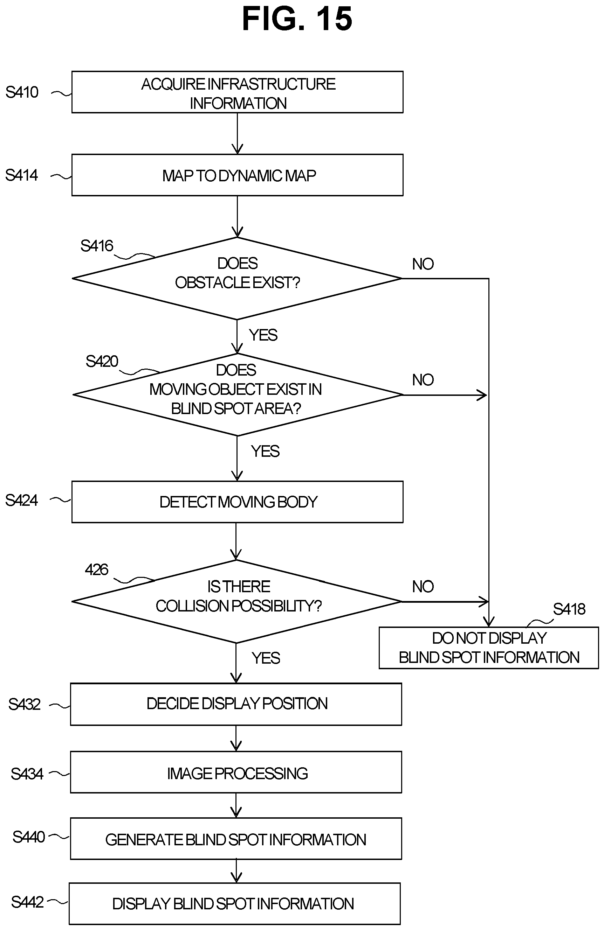

FIG. 15 is a flowchart illustrating a display control method executed by the display control system 1 according to the fourth embodiment. In the same manner as in the above-described embodiments, the infrastructure sensor information acquisition unit 114 acquires the infrastructure sensor information (step S410). In the same manner as in the above-described embodiments, the map information management unit 118 maps, to the dynamic map, the object indicated in the infrastructure sensor information (step S414).

The obstacle determination unit 120 determines whether an obstacle exists around the vehicle 20 (step S416). Here, in the fourth embodiment, the obstacle determination unit 120 determines whether an obstacle exists without using the vehicle sensor information. The obstacle determination unit 120 may determine, as an obstacle, a stationary object existing at a position at which a distance from the vehicle sensor 22 is equal to or shorter than a threshold value determined in advance on the dynamic map to which the position of the vehicle 20 is mapped using the infrastructure sensor information. In other words, in the fourth embodiment, the presence/absence of an obstacle using the infrastructure sensor 10 can be determined. As described above, the threshold value may differ depending on a size of a stationary object. In other words, the threshold value may be set such that it increases as the size of the stationary object becomes larger.

When the obstacle determination unit 120 determines that no obstacle exists around the vehicle 20 (NO in S416), the display control unit 180 may decide not to display the blind spot information on the vehicle 20 (step S418). On the other hand, the obstacle determination unit 120 determines that an obstacle exists around the vehicle 20 (YES in S416), in the same manner as in the above-described embodiments, the moving object determination unit 130 determines whether a moving object 70 exists in the blind spot area (step S420).

As described above, the moving object determination unit 130 calculates, as the blind spot area, an area blocked by an obstacle when viewed from the viewpoint of the vehicle 20. Here, in the fourth embodiment as well, the moving object determination unit 130 may calculate the blind spot area using the dynamic map. The moving object determination unit 130 maps the blind spot area to the dynamic map.

Here, in the fourth embodiment, the moving object determination unit 130 may calculate, as the blind spot area, an area on the opposite side to the vehicle 20 with respect to the obstacle. Alternatively, the moving object determination unit 130 may calculate, as the blind spot area, an area blocked by an obstacle when viewed from the viewpoint of the vehicle 20. In this case, the moving object determination unit 130 may calculate, as the blind spot area, an area blocked by an obstacle when viewed from the point closest to the obstacle in the vehicle 20. Alternatively, the moving object determination unit 130 may calculate, as the blind spot area, an area blocked by an obstacle when viewed from a driver's seat of the vehicle 20.

Then, in the same manner as in the first embodiment and the like, the moving object determination unit 130 determines whether a moving object 70, such as a pedestrian or a bicycle, is mapped to the blind spot area that is mapped to the dynamic map. When the moving object 70 is mapped to the blind spot area, the moving object determination unit 130 determines that the moving object 70 exists in the blind spot area.

When the moving object determination unit 130 determines that no moving object 70 exists in the blind spot area (NO in S420), the display control unit 180 determines not to display the blind spot information on the vehicle 20 (step S418). On the other hand, when the moving object determination unit 130 determines that the moving object 70 exists in the blind spot area (YES in S420), the possibility of collision between the moving body 80 and the moving object 70 is determined.

The moving body detection unit 140 detects a moving body 80 traveling around the vehicle 20 (step S424). Here, in the fourth embodiment, the moving body detection unit 140 detects a moving body 80 without using the vehicle sensor information. The moving body detection unit 140 detects, using the infrastructure sensor information, a moving body 80 traveling around the vehicle 20. Then, the moving body detection unit 140 may detect the moving body 80 using the dynamic map. The moving body detection unit 140 detects the position and the movement direction of the moving body 80 with respect to the vehicle 20 on the dynamic map to which the moving body 80 is mapped using the infrastructure sensor information.

As described above, the collision possibility determination unit 246 determines whether there is a possibility that the moving body 80 traveling around the vehicle 20 and the moving object 70 existing in the blind spot area may collide with each other (step S426). When the collision possibility determination unit 246 determines that there is no possibility that the moving body 80 and the moving object 70 may collide with each other (NO in S426), the display control unit 180 determines not to display the blind spot information on the vehicle 20 (step S418).

On the other hand, when the collision possibility determination unit 246 determines that there is a possibility that the moving body 80 and the moving object 70 may collide with each other (YES in S426), the display control unit 180 determines to display the blind spot information on the vehicle 20. In this case, in the same manner as in the first embodiment and the like, the display position decision unit 150 decides, according to the position of the detected moving body 80, a display position at which the information is displayed on the surface of the vehicle 20 (step S432). Here, in the fourth embodiment, since the display device is not provided on the vehicle 20, the display position decision unit 150 decides the surface of the vehicle 20 on which the blind spot information is projected.

The display position decision unit 150 may decide the display device 16 capable of projecting an image of the blind spot information on the surface corresponding to the display position. For example, the display position decision unit 150 may decide, using the dynamic map, the display device 16 that projects an image on the surface corresponding to the display position. For example, the display position decision unit 150 may decide, as the display device 16 that projects an image on the surface corresponding to the display position, the display device 16 which is closest to the surface corresponding to the display position and which does not have any object between the display device 16 and the surface corresponding to the display position. The display control unit 180 may decide the display device 16 to be used.

The image processing unit 360 executes the image processing for generating an image to be projected on the vehicle 20 (step S434). Specifically, the image processing unit 360 executes the above-described processes of S314 to S318 of FIG. 10. As such, the image processing for generating the blind spot information to be projected on the surface of the vehicle 20 is executed. Details will be described below. When there is a plurality of surfaces (for example, two) corresponding to the display position, the image processing unit 360 may execute the image processing on the image to be projected on the surfaces in consideration of a shape composed of the plurality of surfaces. At that time, the image processing unit 360 may execute the image processing using a projection mapping technology. The shape composed of the plurality of surfaces can be recognized using the infrastructure sensor information obtained by the infrastructure sensor 10 that has detected the surfaces. Further, when a three-dimensional shape of the vehicle 20 is mapped to the dynamic map, the shape composed of the plurality of surfaces can be recognized using the dynamic map.

Then, the blind spot information generation unit 170 generates the blind spot information to which the image processing is applied by the image processing unit 360 (step S440). Then, the display control unit 180 executes the control for displaying the blind spot information on the surfaces of the vehicle 20 (step S442). Specifically, the display control unit 180 controls the display device 16 decided to project the blind spot information such that it projects (displays) an image corresponding to the blind spot information on the surfaces corresponding to the display position. In other words, the display control unit 180 transmits the blind spot information to the display device 16 and projects (displays) the image corresponding to the blind spot information on the surfaces corresponding to the display position. At that time, the display control unit 180 controls the display device 16 such that a projection direction of the display device 16 faces the surfaces corresponding to the display position.

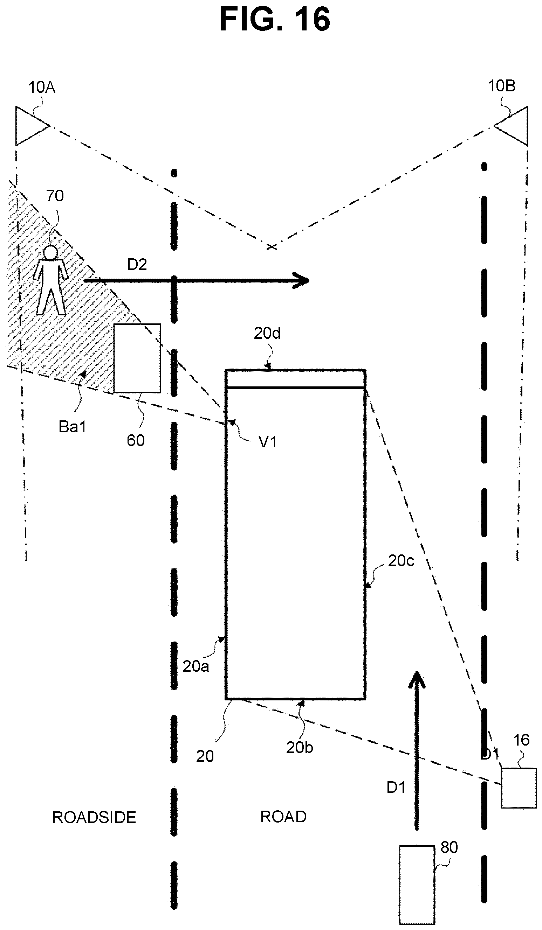

FIG. 16 is a diagram used for describing processing executed by the display control system 1 according to the fourth embodiment. FIG. 16 exemplifies a relative positional relationship, according to the fourth embodiment, between the vehicle 20, the stationary object 60 (the obstacle), the moving object 70, and the moving body 80. Further, it can be said that FIG. 16 exemplifies, according to the fourth embodiment, the dynamic map to which the vehicle 20, the stationary object 60, the moving object 70, and the moving body 80 are mapped. Hereinafter, differences between FIG. 8 and FIG. 16 will be mainly described. Here, the relative positional relationship between the vehicle 20, the stationary object 60, the moving object 70, and the moving body 80 is substantially the same as those in the first embodiment and the like.

As described above, the vehicle 20 is not provided with the vehicle sensor 22 and the display device 24. Then, the vehicle 20 has a shape surrounded by a left side surface 20a, a rear surface 20b, a right side surface 20c, and a front surface 20d.

On the roadside on the left side of the road, the infrastructure sensor 10A is installed. The infrastructure sensor 10A detects (senses, photographs) the road from the roadside on the left side. Further, on the roadside on the right side of the road, the infrastructure sensor 10B is installed. The infrastructure sensor 10B detects (senses, photographs) the road from the roadside on the right side. Further, on the roadside on the right side of the road, the display device 16 is installed. The display device 16 is installed at a position on the right rear of the vehicle 20. The infrastructure sensors 10A, 10B and the display device 16 are communicably connected to the management device 50.

Here, the vehicle 20 can be detected by the infrastructure sensors 10A, 10B. Further, the stationary object 60 can be detected by at least the infrastructure sensor 10A. Further, the moving object 70 can be detected by at least the infrastructure sensor 10A. Further, the moving body 80 can be detected by the infrastructure sensor 10B.

The infrastructure sensor information acquisition unit 114 acquires the infrastructure sensor information indicating the vehicle 20, the stationary object 60, the moving object 70, and the moving body 80 (step S410). Further, the map information management unit 118 updates the dynamic map using the infrastructure sensor information acquired from the infrastructure sensor 10 (step S414). Therefore, the map information management unit 118 maps each object exemplified in FIG. 16 to the dynamic map. Then, the map information management unit 118 recognizes the positional relationship between each object exemplified in FIG. 16.

Further, the obstacle determination unit 120 determines the stationary object 60 as an obstacle (YES in S416). Further, the moving object determination unit 130 calculates, using, for example, the dynamic map, the blind spot area Ba1 blocked by the stationary object 60 (the obstacle) when viewed from a viewpoint VI, which is a point close to the stationary object 60 (the obstacle) in the vehicle 20. Then, the moving object determination unit 130 determines, using, for example, the dynamic map, that the moving object 70 exists in the blind spot area Ba1 (YES in S420).

Further, the moving body detection unit 140 detects the fact that the moving body 80 is traveling from the rear of the vehicle 20 toward the side of the right side surface thereof (step S426). The collision possibility determination unit 246 determines that there is a possibility that the moving body 80 and the moving object 70 may collide with each other (YES in S226). The display position decision unit 150 decides, according to the position of the moving body 80, to display the blind spot information on the rear surface 20b and the right side surface 20c of the vehicle 20, which are positions that can be visually recognized from the moving body 80 (step S432). At that time, the display position decision unit 150 decides to project the blind spot information on the display device 16 installed in the vicinity of the rear surface 20b and the right side surface 20c of the vehicle 20.

The image processing unit 360 generates an image to be displayed on the rear surface 20b and the right side surface 20c of the vehicle 20 using the image processing (step S434). Here, as described with reference to FIGS. 11 and 12, the image processing unit 360 may extract a moving object image 701m, which is a photographed image of the moving object 70, from the infrastructure sensor image Iml acquired by the infrastructure sensor 10A. Then, the image processing unit 360 may execute the above-described image processing using the extracted moving object image 701m. Alternatively, as described with reference to FIG. 13, the image processing unit 360 may execute the image processing using computer graphics such that the abstract image corresponding to the moving object 70 moves according to an actual movement when the moving object 70 is viewed from the viewpoint of the moving body 80. Further, the image processing unit 360 may acquire, from the dynamic map, the three-dimensional image when the direction of the moving object 70 is viewed from the viewpoint of the moving body 80 in the state where the vehicle 20 and the obstacle (the stationary object 60) do not exist. Then, the image processing unit 360 may generate the display image by superimposing the extracted moving object image 701m or the abstract image on the acquired three-dimensional image.

The image processing unit 360 may execute the image processing using the projection mapping technology in consideration of the shape composed of the rear surface 20b and the right side surface 20c of the vehicle 20. In this case, in consideration of the shape composed of the rear surface 20b and the right side surface 20c, the image processing unit 360 may also execute the image processing such that an image as if the vehicle 20 and the obstacle (the stationary object 60) do not exist is projected.

Then, the display control unit 180 transmits the blind spot information to which the image processing is applied to the display device 16. Then, under the control of the display control unit 180, the display device 16 projects (displays) an image corresponding to the blind spot information on the rear surface 20b and the right side surface 20c of the vehicle 20.

The display control system 1 according to the fourth embodiment has a configuration in which the projection device (the display device 16) installed outside the vehicle 20 projects the blind spot information on the surface of the vehicle 20. With such a configuration, it is possible to display the blind spot information on the surface of the vehicle 20 even when the display device is not provided on the vehicle 20. Further, there is a high possibility that a total area of the surface of the vehicle 20 on which the display device 16 is installed is larger than an area of the display device 16. Then, in the fourth embodiment, the blind spot information can be displayed on an entire surface of the vehicle 20. Therefore, as compared with the above-described embodiments, it is possible to display a large image that is easily viewed from the moving body 80.

Here, in the third embodiment, a different image can be displayed on each display device 24 provided on the vehicle 20. Therefore, in the third embodiment, when images are displayed on the plurality of display devices 24, a spatial connection between the images may not be taken into consideration. Further, as described above, the area of the display device 24 installed on the vehicle 20 may be smaller than the total area of the surface of the vehicle 20 on which the display device 24 is installed. Therefore, the display devices 24 installed on the two adjacent surfaces of the vehicle 20 respectively may not be in contact with each other. For example, in the example of FIG. 8, the display device 24B and the display device 24C installed respectively on the rear surface and the right side surface of the vehicle 20 adjacent to each other across the right rear corner may not be in contact with each other. From the above fact, for example, when two display devices 24 are viewed at the same time from the viewpoint of the moving body 80, it may be viewed that images that are not physically connected to each other are displayed on the two display devices 24. Further, since the size of the display device 24 is not so large as described above, it may be difficult for the image displayed on the display device 24 to be viewed from the viewpoint of the moving body 80.

On the other hand, the display control system 1 according to the fourth embodiment can project one and the same image over a plurality of surfaces when displaying an image on the plurality of surfaces of the vehicle 20. Therefore, as compared with the cases of the above-described embodiments, one image can be displayed in a wider range of the vehicle 20. As such, it is possible to display, on the surface of the vehicle 20, an image that is more realistic for the driver and the like of the moving body 80. Therefore, it is possible to warn that there is the possibility that the moving body 80 may collide with the moving object 70 more effectively than the above-described embodiments.

### Modified Examples

The present invention is not limited to the above embodiments, and can be appropriately modified within a range not departing from the scope thereof. For example, each of the plurality of the above-described embodiments is applicable to each other. For example, although the above-described third embodiment is described to correct the second embodiment, the configuration of the third embodiment may be applied to the first embodiment. Further, although the above-described fourth embodiment is described to correct the third embodiment, the configuration of the fourth embodiment may be applied to the first embodiment or the second embodiment.

Further, the order of each step in the above-described flowchart can be changed as appropriate. Further, one or more of each step in the flowchart may be omitted. For example, in FIG. 4, the order of the processes of S110 and S112 may be reversed. Further, in FIG. 4, the process of S112 may be omitted. In other words, in the first embodiment, the vehicle sensor 22 is not a necessary component. In this case, the process of S 122 may be executed instead of the process of S 118.

Further, in the above-described embodiments, although the blind spot information is displayed on the surface (an outer surface) of the vehicle 20, the configuration is not limited thereto. The blind spot information may be displayed inside the vehicle 20. For example, the blind spot information may be displayed on a display that can be visually recognized from the driver's seat of the vehicle 20. As such, it is possible for a driver and the like of the vehicle 20 to grasp the blind spot information.

Further, in the fourth embodiment, although it is assumed that the vehicle sensor is not provided in the vehicle 20, the configuration is not limited thereto. Even when the vehicle sensor 22 is provided in the vehicle 20, the blind spot information may be displayed on the surface of the vehicle 20 using the projection device (the display device 16) provided outside the vehicle 20. In this case, in the flowchart illustrated in FIG. 15, there may be a process for acquiring the vehicle sensor information. Further, in this case, in the flowchart of FIG. 15, the processes before S434 may be substantially the same as the processes according to the second embodiment (S210 to S232 of FIG. 7).

Further, in the above-described example, the program can be stored and supplied to a computer using various types of non-transitory computer-readable medium. The non-transitory computer-readable medium includes various types of tangible storage media. Examples of the non-transitory computer-readable medium include a magnetic recording medium (for example, a flexible disk, a magnetic tape, and a hard disk drive), a magneto-optical recording medium (for example, a magneto-optical disk), a CD-ROM, a CD-R, a CD-R/W, a semiconductor memory (for example, a mask ROM, a programmable ROM (PROM), an erasable PROM (EPROM), a flash ROM, and a RAM). Further, the program may also be supplied to the computer using various types of transitory computer-readable medium. Examples of the transitory computer-readable medium include an electrical signal, an optical signal, and electromagnetic waves. The transitory computer-readable medium can supply the program to the computer via a wired communication path, such as an electric wire and an optical fiber, or a wireless communication path.

## Claims

1. A display control system (1) comprising:
an infrastructure sensor information acquisition unit (114) configured to acquire infrastructure sensor information, which is obtained when an infrastructure sensor (10) provided around a road detects information around a vehicle (20) on the road;
a blind spot information generation unit (170) configured to generate, based on the infrastructure sensor information, blind spot information on a blind spot area that becomes a blind spot due to an obstacle (60) when viewed from the vehicle (20); and
a display control unit (180) configured to control a display device such that the blind spot information is displayed on the vehicle (20).

2. The display control system (1) according to claim 1, further comprising:
an obstacle determination unit (120) configured to determine whether the obstacle (60) exists around the vehicle (20) when viewed from a vehicle sensor (22) mounted on the vehicle (20),
wherein the display control unit (180) is configured to, when the obstacle determination unit (120) determines that the obstacle (60) exists around the vehicle (20), control the display device such that the blind spot information on the vehicle (20) is displayed.

3. The display control system (1) according to claim 2, wherein the display control unit (180) is configured to, when the obstacle determination unit (120) determines that the obstacle (60) does not around the vehicle (20), control the display device such that vehicle sensor information, which is information detected by the vehicle sensor (22), is displayed on the vehicle (20).

4. The display control system (1) according to any one of claims 1 to 3, further comprising:
a moving body detection unit (140) configured to detect a moving body (80) traveling around the vehicle (20); and
a display position decision unit (150) configured to decide a display position at which at least the blind spot information is displayed on a surface of the vehicle (20) according to a position of the detected moving body (80),
wherein the display control unit (180) is configured to control the display device such that at least the blind spot information is displayed on the decided display position.

5. The display control system (1) according to any one of claims 1 to 4, wherein the display control unit (180) is configured to, when a determination is made that a moving object (70) exists in the blind spot area, control the display device such that the blind spot information is displayed on a surface of the vehicle (20).

6. The display control system (1) according to any one of claims 1 to 4, wherein the display control unit (180) is configured to, when a determination is made that there is a possibility of a collision between a moving body (80) traveling around the vehicle (20) and a moving object (70) existing in the blind spot area, control the display device such that the blind spot information is displayed on a surface of the vehicle (20).

7. The display control system (1) according to claim 5 or 6, wherein:
the blind spot information includes an image of the moving object (70) existing in the blind spot area;
the blind spot information generation unit (170) is configured to, when the blind spot information is displayed on the surface of the vehicle (20), generate the blind spot information to which image processing is applied such that a movement direction of the image of the moving object (70) corresponds to an actual movement direction of the moving object (70) when an actual moving object (70) is assumed to be viewed from a viewpoint of a moving body (80) traveling around the vehicle (20); and
the display control unit (180) is configured to control the display device such that the blind spot information, to which the image processing is applied, is displayed on the surface of the vehicle (20).

8. A display control method comprising:
acquiring infrastructure sensor information, which is obtained when an infrastructure sensor (10) provided around a road detects information around a vehicle (20) on the road;
generating, based on the infrastructure sensor information, blind spot information on a blind spot area that becomes a blind spot due to an obstacle (60) when viewed from the vehicle (20); and
controlling a display device such that the blind spot information is displayed on the vehicle (20).

9. A non-transitory storage medium storing instructions that are executable by one or more processors and that cause the one or more processors to perform functions comprising:
acquiring infrastructure sensor information, which is obtained when an infrastructure sensor (10) provided around a road detects information around a vehicle (20) on the road;
generating, based on the infrastructure sensor information, blind spot information on a blind spot area that becomes a blind spot due to an obstacle (60) when viewed from the vehicle (20); and
controlling a display device such that the blind spot information is displayed on the vehicle (20).
